# EUROPEAN PATENT APPLICATION

(11) **EP 4 294 104 A1**
(43) Date of publication of application: **20.12.2023**
(21) Application number: 22778835.3
(22) Date of filing: 28.03.2022
(51) Int. Cl.: H04W 74/00, H04W 36/00

(54) **COMMUNICATION METHOD AND COMMUNICATION APPARATUS**

(30) Priority: 01.04.2021 CN 202110355629
(71) Applicant: Huawei Technologies Co., Ltd., Shenzhen, Guangdong 518129 (CN)
(72) Inventor: HU, Xingxing, Shenzhen, Guangdong 518129 (CN); GENG, Tingting, Shenzhen, Guangdong 518129 (CN); ZHANG, Hongzhuo, Shenzhen, Guangdong 518129 (CN)
(74) Representative: Pfenning, Meinig & Partner mbB
(86) International application number: PCT/CN2022/083259
(87) International publication number: WO 2022/206653

(57) **Abstract**

Embodiments of this application provide a communication method and a communication apparatus. After a master access network device of a terminal device changes from a source master access network device to a target access network device, the terminal device sends a first RA report to a source secondary access network device through the target access network device, so that the source secondary access network device optimizes an RA configuration based on the first RA report, to increase an RA access success rate of the terminal device for the source secondary access network device. In the method, the terminal device obtains the first RA report, where the first RA report includes information about a random access procedure initiated by the terminal device to the source secondary access network device. After the master access network device of the terminal device changes from the source master access network device to the target access network device, the terminal device sends a first message to the target access network device, where the first message includes the first RA report and first identification information, and the first identification information indicates the source master access network device.

## Description

This application claims priority to Chinese Patent Application No. 202110355629.8, filed with the China National Intellectual Property Administration on April 1, 2021 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

In a wireless communication network, a terminal device may initiate random access on a random access channel (random access channel, RACH), to implement uplink synchronization, and further obtain information required for communicating with a network device. This procedure is referred to as a random access procedure, a RACH procedure, or an RA procedure.

Specifically, in a dual-connectivity (dual-connectivity, DC) scenario in which one terminal device communicates with a plurality of network devices, the terminal device may separately perform a RACH procedure with the plurality of network devices. The plurality of network devices may include a master access network device and a secondary access network device. The master access network device may also be referred to as a master node (master node, MN), and the secondary access network device may also be referred to as a secondary node (secondary node, SN).

Currently, to avoid a failure of a RACH procedure that is caused by an inappropriate configuration of a network device, a terminal device records information in the RACH procedure, generates a corresponding random access report (RACH report or RA report), and reports the RA report according to an indication of the network device. In this way, the network device identifies problems in the RACH procedure based on the RA report, and optimizes the configuration in a timely manner, to increase a success rate of the terminal device in the RACH procedure. For example, in a DC scenario, a terminal device may record an RA report for a secondary access network device, and trigger, according to indication information delivered by the secondary access network device, reporting of the RA report to the secondary access network device through a master access network device, so that the secondary access network device optimizes a related configuration based on the RA report.

However, after a terminal device records an RA report corresponding to an SN side, in a case that the terminal device does not report the RA report because the terminal device does not receive, in a timely manner, indication information delivered by an SN, after the terminal device is disconnected from an MN, how to report the RA report corresponding to the SN side is a technical problem to be resolved urgently.

### SUMMARY

Embodiments of this application provide a communication method and a communication apparatus. After a master access network device of a terminal device changes from a source master access network device to a target access network device, the terminal device sends a first RA report to a source secondary access network device through the target access network device, so that the source secondary access network device receives the RA report and optimizes a related RA configuration based on the RA report, to increase an RA access success rate of the terminal device for the source secondary access network device.

A first aspect of embodiments of this application provides a communication method. The method is applied to a communication apparatus. The communication apparatus may be a terminal device, or may be a component (for example, a processor, a chip, a chip system, or the like) of the terminal device. In the method, when a master access network device of the terminal device is a source master access network device, the terminal device obtains a first random access report RA report, where the first RA report includes information about a random access procedure initiated by the terminal device to a source secondary access network device. Then, after the master access network device of the terminal device changes from the source master access network device to a target access network device, the terminal device sends a first message to the target access network device, where the first message includes the first RA report and first identification information, and the first identification information indicates the source master access network device.

Based on the foregoing technical solution, when the master access network device accessed by the terminal device is the source master access network device, and a secondary access network device accessed by the terminal device is the source secondary access network device, the terminal device obtains the first RA report in the random access procedure initiated to the source secondary access network device. Then, after the master access network device of the terminal device changes from the source master access network device to the target access network device, the terminal device sends the first RA report to the source secondary access network device through the target access network device. Specifically, the terminal device sends, to the target access network device, the first message that includes the first RA report and the first identification information indicating the source master access network device, so that the target access network device can send the first RA report to the source secondary access network device through the source master access network device based on the first identification information, and subsequently the source secondary access network device receives the RA report and optimizes a related RA configuration based on the RA report. This improves an RA access success rate of the terminal device for the source secondary access network device.

It should be noted that, in the foregoing technical solution, the terminal device supports simultaneous access to a plurality of access network devices, that is, a plurality of access network devices simultaneously provide communication services for the terminal device, for example, in a dual-connectivity (dual-connectivity, DC) or multi-connectivity (Multi-connectivity) scenario. Dual-connectivity may also be considered as a special scenario of multi-connectivity.

Further, in the DC scenario, in the plurality of access network devices that provide the services for the terminal device, an access network device that has a control plane bearer of the terminal device with a core network device is a master access network device of the terminal device, for example, an eNB in an EN-DC scenario, an eNB in an NGEN-DC scenario, a gNB in an NE-DC scenario, or the like. An access network device that does not have the control plane bearer of the terminal device with the core network device is a secondary access network device of the terminal device, for example, a gNB in an EN-DC scenario, a gNB in an NGEN-DC scenario, an eNB in an NE-DC scenario, or the like. In embodiments and a subsequent embodiment, when the master access network device of the terminal device is the source master access network device, the terminal device may further be connected to a secondary access network device, for example, the source secondary access network device. When the master access network device of the terminal device changes from the source master access network device to the target access network device, the terminal device may also be connected to a secondary access network device, for example, the source secondary access network device or another access network device. Alternatively, the terminal device may not bfe connected to a secondary access network device. In this case, only the target access network device provides a service for the terminal device. This is not limited herein.

In a possible implementation of the first aspect of embodiments of this application, the first identification information is carried in the first message in a non-container (container) form.

Based on the foregoing technical solution, after the terminal device sends the first information to the target access network device, the target access network device needs to determine the source master access network device based on the first identification information in the first message. In this case, the first identification information may be carried in the first message in the non-container form. In this way, the target access network device can parse and obtain, from the first message, the first identification information indicating the source master access network device.

In a possible implementation of the first aspect of embodiments of this application, the first message further includes second identification information, the second identification information indicates the source secondary access network device, and the second identification information is carried in the first message in a non-container form.

Based on the foregoing technical solution, one master access network device may be connected to a plurality of secondary access network devices. The terminal device subsequently sends the first RA report to the source master access network device through the target access network device, and then the source master access network device sends the first RA report to the source secondary access network device. Therefore, the terminal device needs to obtain the second identification information indicating the source secondary access network device, so that the source master access network device can subsequently send the first RA report to the source secondary access network device based on the second identification information.

In a possible implementation of the first aspect of embodiments of this application, before the terminal device sends the first message to the target access network device, the method further includes: The terminal device receives first indication information from the target access network device, where the first indication information indicates to report information about a random access procedure on a secondary access network device side.

Based on the foregoing technical solution, the terminal device may trigger, based on the first indication information that is sent by the target access network device and that indicates to report the information about the random access procedure on the secondary access network device side, sending of the first message to the target access network device, so that the terminal device knows a sending occasion for sending the first message, thereby improving communication efficiency.

Optionally, the first indication information indicates the terminal device to report information about a random access procedure of the terminal device on the secondary access network device side. The secondary access network device may be a secondary access network device historically accessed by the terminal device, for example, a secondary access network device that is last accessed one or more times, a secondary access network device that is accessed within last preset duration, or the like. This is not limited herein.

In a possible implementation of the first aspect of embodiments of this application, before the terminal device receives the first indication information from the target access network device, the method further includes: The terminal device sends second indication information to the target access network device, where the second indication information indicates that the terminal device has the information about the random access procedure on the secondary access network device side.

Based on the foregoing technical solution, the target access network device may trigger, based on the second indication information that is sent by the terminal device and that indicates that the terminal device has the information about the random access procedure on the secondary access network device side, the target access network device to send the first indication information. In this way, the target access network device may trigger an RA report reporting procedure for only the terminal device that has the information about the random access procedure on the secondary access network device side, to avoid unnecessary signaling consumption.

In a possible implementation of the first aspect of embodiments of this application, the method further includes: The terminal device obtains a second RA report, where the second RA report includes information about a random access procedure initiated by the terminal device to the source master access network device; and the terminal device sends the second RA report to the target access network device.

Optionally, the second RA report and the first RA report are carried in a same message.

Optionally, the second RA report and the first RA report are carried in different messages.

Based on the foregoing technical solution, when the master access network device of the terminal device is the source master access network device, the terminal device may further obtain the information about the random access procedure initiated by the terminal device to the source master access network device to obtain the second RA report, and send the second RA report to the source master access network device through the target access network device, so that the source master access network device subsequently receives the second RAreport and optimizes a related RA configuration based on the second RA report. This improves an RA access success rate of the terminal device for the source master access network device.

In a possible implementation of the first aspect of embodiments of this application, before the terminal device sends the second RA report to the target access network device, the method further includes: The terminal device receives third indication information from the target access network device, where the third indication information indicates to report information about a random access procedure on the master access network device side.

Based on the foregoing technical solution, the terminal device may trigger, based on the third indication information that is sent by the target access network device and that indicates to report the information about the random access procedure on the master access network device side, sending of the second RA report to the target access network device, so that the terminal device knows a sending occasion for sending the second RA report, thereby improving communication efficiency.

Optionally, the third indication information and the first indication information are carried in a same message sent by the target access network device to the terminal device, or the third indication information and the first indication information are carried in different messages sent by the target access network device to the terminal device.

Optionally, the third indication information indicates the terminal device to report information about a random access procedure of the terminal device on the master access network device side. The master access network device may be a master access network device historically accessed by the terminal device, for example, a master access network device that is last accessed one or more times, a master access network device that is accessed within last preset duration, or the like. This is not limited herein.

In a possible implementation of the first aspect of embodiments of this application, before the terminal device receives the third indication information from the target access network device, the method further includes: The terminal device sends fourth indication information to the target access network device, where the fourth indication information indicates that the terminal device has the information about the random access procedure on the master access network device side.

Based on the foregoing technical solution, the target access network device may trigger, based on the fourth indication information that is sent by the terminal device and that indicates that the terminal device has the information about the random access procedure on the master access network device side, the target access network device to send the third indication information. In this way, the target access network device may trigger an RA report reporting procedure for only the terminal device that has the information about the random access procedure on the master access network device side, to avoid unnecessary signaling consumption.

Optionally, the fourth indication information and the second indication information are carried in a same message sent by the target access network device to the terminal device, or the fourth indication information and the second indication information are carried in different messages sent by the target access network device to the terminal device.

Optionally, the third indication information and the first indication information may be same indication information, and indicate the terminal device to report information about a random access procedure corresponding to the terminal device (including information about a random access procedure on a master access network device side and/or a secondary access network device side). The fourth indication information and the second indication information may be same indication information, and indicate that the terminal device has information about a random access procedure (including information about a random access procedure on a master access network device side and/or a secondary access network device side).

A second aspect of embodiments of this application provides a communication method. The method is applied to a communication apparatus. The communication apparatus may be a target access network device, or may be a component (for example, a processor, a chip, a chip system, or the like) of the target access network device. In the method, the target access network device receives a first message from a terminal device, where the first message includes a first RA report and first identification information, the first RA report includes information about a random access procedure initiated by the terminal device to a source secondary access network device, and the first identification information indicates a source master access network device. Then, the target access network device sends the first RA report to the source secondary access network device through the source master access network device.

Based on the foregoing technical solution, after a master access network device of the terminal device changes from the source master access network device to the target access network device, the target access network device receives, from the terminal device, the first message that includes the first RA report. Then, the target access network device may send the first RA report to the source master access network device based on the first identification information, so that the source master access network device sends the first RA report to the source secondary access network device. Subsequently, the source secondary access network device receives the RA report, and optimizes a related RA configuration based on the RA report. This improves an RA access success rate of the terminal device for the source secondary access network device.

In a possible implementation of the second aspect of embodiments of this application, the first RA report is carried in a second message sent by the target access network device to the source master access network device.

Based on the foregoing technical solution, in a process in which the target access network device sends the first RA report to the source secondary access network device through the source master access network device, the target access network device may determine the source master access network device by using the first identification information, and send, through a communication connection between the target access network device and the source master access network device, the second message that carries the first RA report, so that the source master access network device receives the first RA report.

In a possible implementation of the second aspect of embodiments of this application, the first RA report is carried in a third message sent by the target access network device to a core network device.

Based on the foregoing technical solution, in a process in which the target access network device sends the first RA report to the source secondary access network device through the source master access network device, the target access network device may implement the process through the core network device. To be specific, the third message that carries the first RA report is sent through a communication connection between the target access network device and the core network device, and the first RA report is sent to the source master access network device through the core network device, so that the source master access network device receives the first RA report.

In a possible implementation of the second aspect of embodiments of this application, the third message further includes target identification information, the target identification information includes at least one of the first identification information and third identification information, and the third identification information is an identifier of the source master access network device that is determined based on the first identification information.

Based on the foregoing technical solution, the third message that is sent by the target access network device to the core network device and that carries the first RA report may further include the target identification information, where the target identification information may be the first identification information sent by the terminal device, or the identifier of the source master access network device that is determined by the target access network device based on the first identification information, so that the core network device may determine the source master access network device based on the target identification information, and send the first RA report to the source master access network device. In this way, the source master access network device receives the first RA report.

In a possible implementation of the second aspect of embodiments of this application, the first message further includes second identification information, the second identification information indicates the source secondary access network device, and the second identification information is carried in the first message in a non-container form. The method further includes: The target access network device sends, to the source master access network device, the second identification information carried in the non-container form.

Optionally, the second identification information is carried in the second message.

Optionally, the second identification information is carried in the third message.

Based on the foregoing technical solution, because an objective of sending the first message by the terminal device is to send the first RA report to the source secondary access network device through the target access network device, the terminal device may further use the first message to carry the second identification information indicating the source secondary access network device. In this case, the target access network device may send the second identification information carried in the non-container form to the source master access network device, for example, use the second message to carry the second identification information and send the second message to the source master access network device, or use the third message to carry the second identification information and send the third message to the core network device, so that a device (the core network device or the source master access network device) that receives the first RA report can determine that the first RA report is associated with the source secondary access network device indicated by the second identifier information. Therefore, the device (the core network device or the source master access network device) that receives the first RA report may determine, based on the second identification information, a specific secondary access network device to which the first RA report is to be sent.

In a possible implementation of the second aspect of embodiments of this application, that the target access network device sends the first RA report to the source secondary access network device through the source master access network device includes: The target access network device sends, to the source secondary access network device through the source master access network device, the first RA report carried in a container form.

Based on the foregoing technical solution, because a communication standard of the target access network device and a communication standard of the source secondary access network device may be the same or different, the first RA report may be carried in the container form, to ensure that the source secondary access network device can parse and obtain the first RA report, and the source master access network device does not need to parse the first RA report.

In a possible implementation of the second aspect of embodiments of this application, the first identification information is carried in the first message in a non-container form.

Based on the foregoing technical solution, after the terminal device sends the first information to the target access network device, the target access network device needs to determine the source master access network device based on the first identification information in the first message. In this case, the first identification information may be carried in the first message in the non-container form. In this way, the target access network device can parse and obtain, from the first message, the first identification information indicating the source master access network device.

In a possible implementation of the second aspect of embodiments of this application, before the target access network device receives the first message from the terminal device, the method further includes: The target access network device sends first indication information to the terminal device, where the first indication information indicates to report information about a random access procedure on a secondary access network device side.

Based on the foregoing technical solution, after the target access network device sends, to the terminal device, the first indication information indicating to report the information about the random access procedure on the secondary access network device side, the terminal device may trigger, based on the first indication information, sending of the first message to the target access network device. In this way, the terminal device clearly determines a sending occasion for sending the first message, to improve communication efficiency.

Optionally, the first indication information indicates the terminal device to report information about a random access procedure of the terminal device on the secondary access network device side. The secondary access network device may be a secondary access network device historically accessed by the terminal device, for example, a secondary access network device that is last accessed one or more times, a secondary access network device that is accessed within last preset duration, or the like. This is not limited herein.

In a possible implementation of the second aspect of embodiments of this application, before the target access network device sends the first indication information to the terminal device, the method further includes: The target access network device receives second indication information from the terminal device, where the second indication information indicates that the terminal device has the information about the random access procedure on the secondary access network device side.

Based on the foregoing technical solution, the target access network device receives the second indication information that is sent by the terminal device and that indicates that the terminal device has the information about the random access procedure on the secondary access network device side, and may trigger, based on the second indication information, the target access network device to send the first indication information. In this way, the target access network device may trigger an RA report reporting procedure for only the terminal device that has the information about the random access procedure on the secondary access network device side, to avoid unnecessary signaling consumption.

In a possible implementation of the second aspect of embodiments of this application, the method further includes: The target access network device receives a second RA report from the terminal device, where the second RA report includes information about a second random access procedure, and the second random access procedure is a random access procedure initiated by the terminal device to the source master access network device; and the target access network device sends the second RA report to the source master access network device.

Optionally, the second RA report and the first RA report are carried in a same message.

Optionally, the second RA report and the first RA report are carried in different messages.

Based on the foregoing technical solution, when the master access network device of the terminal device is the source master access network device, the terminal device may further obtain the information about the random access procedure initiated by the terminal device to the source master access network device to obtain the second RA report, and send the second RA report to the source master access network device through the target access network device, so that the source master access network device subsequently receives the second RAreport and optimizes a related RA configuration based on the second RA report. This improves an RA access success rate of the terminal device for the source master access network device.

In a possible implementation of the second aspect of embodiments of this application, before the target access network device receives the second RA report from the terminal device, the method further includes: The target access network device sends third indication information to the terminal device, where the third indication information indicates to report information about a random access procedure on the master access network device side.

Optionally, the third indication information and the first indication information are carried in a same message sent by the target access network device to the terminal device, or the third indication information and the first indication information are carried in different messages sent by the target access network device to the terminal device.

Based on the foregoing technical solution, the target access network device sends, to the terminal device, the third indication information indicating to report the information about the random access procedure on the master access network device side. Then, the terminal device may trigger, based on the third indication information, sending of the second RA report to the target access network device. In this way, the terminal device clearly determines a sending occasion for sending the second RA report, to improve communication efficiency.

In a possible implementation of the second aspect of embodiments of this application, before the target access network device sends the third indication information to the terminal device, the method further includes: The target access network device receives fourth indication information from the terminal device, where the fourth indication information indicates that the terminal device has the information about the random access procedure on the master access network device side.

Based on the foregoing technical solution, the target access network device receives the fourth indication information that is sent by the terminal device and that indicates that the terminal device has the information about the random access procedure on the master access network device side, and triggers, based on the fourth indication information, sending of third indication information to the terminal device. In this way, the target access network device may trigger an RA report reporting procedure for only the terminal device that has the information about the random access procedure on the master access network device side, to avoid unnecessary signaling consumption.

Optionally, the fourth indication information and the second indication information are carried in a same message sent by the target access network device to the terminal device, or the fourth indication information and the second indication information are carried in different messages sent by the target access network device to the terminal device.

In a possible implementation of the second aspect of embodiments of this application, the method further includes: The target access network device sends fifth indication information to the source master access network device, where the fifth indication information indicates that the first RA report includes the information about the random access procedure initiated by the terminal device to the source secondary access network device.

Based on the foregoing technical solution, the target access network device may further send the fifth indication information to the source master access network device, where the fifth indication information indicates that the first RA report includes the information about the random access procedure initiated by the terminal device to the source secondary access network device, so that a device (the core network device or the source master access network device) that receives the first RA report may determine that the first RA report is associated with the source secondary access network device.

A third aspect of embodiments of this application provides a communication method. The method is applied to a communication apparatus. The communication apparatus may be a core network device, or may be a component (for example, a processor, a chip, a chip system, or the like) of the core network device. In the method, the core network device receives a third message from a target access network device, where the third message includes a first RA report and target identification information, the first RA report includes information about a random access procedure initiated by a terminal device to a source secondary access network device, and the target identification information is used to determine a source master access network device. Then, the core network device sends the first RA report to the source secondary access network device through the source master access network device.

Based on the foregoing technical solution, after a master access network device of the terminal device changes from the source master access network device to the target access network device, the core network device receives, from the target access network device, the third message that includes the first RA report and the target identification information. Then, the core network device may determine the source master access network device based on the target identification information, and send the first RA report to the source master access network device, so that the source master access network device sends the first RA report to the source secondary access network device. Subsequently, the source secondary access network device receives the RA report, and optimizes a related RA configuration based on the RA report. This improves an RA access success rate of the terminal device for the source secondary access network device.

In a possible implementation of the third aspect of embodiments of this application, the target identification information includes first identification information, and the first identification information indicates the source master access network device. The first identification information includes primary cell (primary cell, PCell) information of the source master access network device, and the PCell information includes at least one of a cell global identity (cell global identification, CGI) of a PCell, a tracking area code (tracking area code, TAC) of the PCell, a physical cell identifier PCI of the PCell, and frequency information.

Based on the foregoing technical solution, when accessing the source master access network device, the terminal device accesses at least the PCell in the source master access network device. Therefore, the first identification information used to determine the source master access network device may be specifically the first identification information indicating the source master access network device. The first identification information includes the PCell information of the source master access network device, that is, the core network device determines the source master access network device by using the PCell information.

In a possible implementation of the third aspect of embodiments of this application,
the target identification information includes primary secondary cell (primary secondary cell, PSCell) information of the source secondary access network device, and the PSCell information includes at least one of a CGI of a PSCell, a TAC of the PSCell, a PCI of the PSCell, and frequency information; and/or
the target identification information includes secondary cell (secondary cell, SCell) information of the source secondary access network device, and the SCell information includes at least one of a CGI of an SCell, a TAC of the SCell, a PCI of the SCell, and frequency information.

Based on the foregoing technical solution, when accessing the source secondary access network device, the terminal device may access the PSCell and/or the SCell in the source master access network device. Therefore, the core network device may determine, by using the target identification information indicating the source secondary access network device, the source master access network device corresponding to the source secondary access network device. Specifically, the target identification information may include the PSCell information and/or the SCell information during access of the terminal device to the source secondary access network device, that is, the source secondary access network device is indicated by using the PCell information and/or the SCell information.

Optionally, the second identification information includes identification information of the source secondary access network device.

Optionally, the second identification information includes identification information of the source secondary access network device, the PSCell information of the source secondary access network device, and the SCell information of the source secondary access network device.

In a possible implementation of the third aspect of embodiments of this application, the target identification information includes an identifier of the source master access network device.

Based on the foregoing technical solution, the target identification information used to determine the source master access network device may include the identifier of the source master access network device, so that the core network device determines the corresponding source master access network device based on the identifier of the source master access network device.

In a possible implementation of the third aspect of embodiments of this application, the third message further includes fifth indication information, and the fifth indication information indicates that the first RA report includes the information about the random access procedure initiated by the terminal device to the source secondary access network device.

Optionally, the core network device further sends the fifth indication information to the source secondary access network device through the source master access network device, where the fifth indication information and the first RA report are carried in a same message.

Based on the foregoing technical solution, the core network device may further receive, by using the third message, the fifth indication information sent by the target access network device, where the fifth indication information indicates that the first RA report includes the information about the random access procedure initiated by the terminal device to the source secondary access network device, so that the core network device determines that the first RA report is associated with the source secondary access network device.

In a possible implementation of the third aspect of embodiments of this application, the first RA report is carried in the third message in a container form, and the target identification information is carried in the third message in a non-container form.

Based on the foregoing technical solution, because a communication standard of the core network device and a communication standard of the source secondary access network device may be the same or different, the first RA report may be carried in the third message in the container form, to ensure that the source secondary access network device can subsequently parse and obtain the first RA report, and the core network device may not need to parse the first RA report. In addition, the target identification information may be carried in the third message in the non-container form, so that the core network device can parse and obtain, from the third message, the target identification information used to determine the source master access network device.

A fourth aspect of embodiments of this application provides a communication method. The method is applied to a communication apparatus. The communication apparatus may be a source master access network device, or may be a component (for example, a processor, a chip, a chip system, or the like) of the source master access network device. In the method, the source master access network device receives, from a target access network device, a first RA report that is carried in a container form, where the first RAreport includes information about a random access procedure initiated by a terminal device to a source secondary access network device. Then, the source master access network device sends the first RA report to the source secondary access network device.

Based on the foregoing technical solution, after a master access network device of the terminal device changes from the source master access network device to the target access network device, the source master access network device receives the first RA report that is carried in the container form and that is from the target access network device. Then, the source master access network device sends the first RA report to the source secondary access network device. Because a communication standard of the target access network device and a communication standard of the source secondary access network device may be the same or different, the first RA report may be carried in the container form, to ensure that the source secondary access network device can parse and obtain the first RA report, the source master access network device does not need to parse the first RA report, and the source secondary access network device optimizes a related RA configuration based on the RA report. This improves an RA access success rate of the terminal device for the source secondary access network device.

In a possible implementation of the fourth aspect of embodiments of this application, the first RA report is carried in a second message sent by the target access network device to the source master access network device.

Based on the foregoing technical solution, in a process in which the source master access network device receives the first RA report from the target access network device, the source master access network device may receive the first RA report in a manner of performing communication through a connection between the target access network device and the source master access network device.

In a possible implementation of the fourth aspect of embodiments of this application, the first RA report is carried in a fourth message sent by the target access network device to the source master access network device through a core network device.

Based on the foregoing technical solution, in a process in which the source master access network device receives the first RA report from the target access network device, the source master access network device may receive, in a manner of performing communication through a connection between the core network device and the source master access network device, the first RA report sent by the target access network device through the core network device.

In a possible implementation of the fourth aspect of embodiments of this application, before the source master access network device sends the first RA report to the source secondary access network device, the method further includes: The source master access network device receives, from the target access network device, second identification information carried in a non-container form, where the second identification information indicates the source secondary access network device.

Optionally, the second identification information and the first RA report are carried in a same message.

Optionally, the second identification information and the first RA report are carried in different messages.

Based on the foregoing technical solution, the source master access network device may further receive the second identification information that is sent by the target access network device and that is carried in the non-container form, and send the first RA report to the source secondary access network device after determining the source secondary access network device based on the second identification information.

In a possible implementation of the fourth aspect of embodiments of this application, the first RA report includes second identification information, and the second identification information indicates the source secondary access network device.

Based on the foregoing technical solution, the source secondary access network device may set a plurality of serving cells, to provide services for terminal devices in different service areas. Therefore, the second identification information included in the first RA report may enable the source secondary access network device to determine a serving cell corresponding to the first RA report and optimize an RA configuration of the serving cell.

In a possible implementation of the fourth aspect of embodiments of this application, the source master access network device receives fifth indication information from the target access network device, where the fifth indication information indicates that the first RA report includes the information about the random access procedure initiated by the terminal device to the source secondary access network device.

Based on the foregoing technical solution, the source master access network device may further receive the fifth indication information sent by the target access network device, where the fifth indication information indicates that the first RA report includes the information about the random access procedure initiated by the terminal device to the source secondary access network device, so that the source master access network device determines that the first RA report is associated with the source secondary access network device.

A fifth aspect of embodiments of this application provides a communication method. The method is applied to a communication apparatus. The communication apparatus may be a source secondary access network device, or may be a component (for example, a processor, a chip, a chip system, or the like) of the source secondary access network device. In the method, the source secondary access network device receives a fifth message from a source master access network device, where the fifth message includes a first RA report, and the first RA report includes information about a random access procedure initiated by a terminal device to the source secondary access network device. Then, the source secondary access network device updates a configuration based on the first RA report.

Based on the foregoing technical solution, after a master access network device of the terminal device changes from the source master access network device to a target access network device, the source secondary access network device receives, from the source master access network device, the fifth message that includes the first RA report. Then, the source secondary access network device receives the RA report, and optimizes a related RA configuration based on the RA report. This improves an RA access success rate of the terminal device for the source secondary access network device.

In a possible implementation of the fifth aspect of embodiments of this application, the first RA report is carried in the fifth message in a container form.

Based on the foregoing technical solution, because a communication standard of the source master access network device and a communication standard of the source secondary access network device may be the same or different, the first RA report may be carried in a third message in the container form, to ensure that the source secondary access network device can parse and obtain the first RA report.

In a possible implementation of the fifth aspect of embodiments of this application, the first RA report includes second identification information, and the second identification information indicates the source secondary access network device.

Based on the foregoing technical solution, the source secondary access network device may set a plurality of serving cells, to provide services for terminal devices in different service areas. Therefore, the second identification information included in the first RA report may enable the source secondary access network device to determine a serving cell corresponding to the first RA report and optimize an RA configuration of the serving cell.

In a possible implementation of any one of the first aspect to the fifth aspect of embodiments of this application, the target access network device and the source master access network device are a same access network device; or the target access network device and the source master access network device are different access network devices.

Based on the foregoing technical solution, a process in which the master access network device of the terminal device changes from the source master access network device to the target access network device may be a process in which the terminal device is handed over between stations. In this case, the target access network device and the source master access network device may be different access network devices. Alternatively, the process may be a process in which the terminal device exits a connected state and reestablishes a connection in an idle state. In this case, the target access network device and the source master access network device may be a same access network device, or may be different access network devices. In this way, the target access network device and the source master access network device can be flexibly implemented according to different scenarios.

In a possible implementation of any one of the first aspect to the fifth aspect of embodiments of this application, the first RA report includes at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a public land mobile network (public land mobile network, PLMN) identifier, a purpose of a first random access procedure, an absolute frequency of a reference signal associated with a random access resource used in the first random access procedure, a frequency domain position associated with an uplink bandwidth part (bandwidth part, BWP) corresponding to the random access resource used in the first random access procedure, a frequency domain position bandwidth associated with the uplink BWP corresponding to the random access resource used in the first random access procedure, a frequency domain position subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about a synchronization signal block (synchronization signal/physical broadcast channel block, SS/PBCH block, SS/PBCH block or SSB) associated with the random access resource used in the first random access procedure, and information about a channel state information-reference signal (channel state information reference signal, CSI-RS) associated with the random access resource used in the first random access procedure, where the first random access procedure is the random access procedure initiated by the terminal device to the source secondary access network device.

In a possible implementation of any one of the first aspect to the fifth aspect of embodiments of this application, the first identification information includes PCell information of the source master access network device, and the PCell information includes at least one of a CGI of a PCell, a TAC of the PCell, a physical cell identifier PCI of the PCell, and frequency information.

Based on the foregoing technical solution, when accessing the source master access network device, the terminal device accesses at least the PCell in the source master access network device. Therefore, the first identification information indicating the source master access network device may specifically include the PCell information during access of the terminal device to the source master access network device, that is, the source master access network device is indicated by using the PCell information.

Optionally, the first identification information includes identification information of the source master access network device.

Optionally, the first identification information includes identification information of the source master access network device and the PCell information of the source master access network device.

In a possible implementation of any one of the first aspect to the fifth aspect of embodiments of this application,
the second identification information includes PSCell information of the source secondary access network device, and the PSCell information includes at least one of a CGI of a PSCell, a TAC of the PSCell, a PCI of the PSCell, and frequency information; and/or
the second identification information includes PSCell information of the source secondary access network device, and the SCell information includes at least one of a CGI of an SCell, a TAC of the SCell, a PCI of the SCell, and frequency information.

Based on the foregoing technical solution, when accessing the source secondary access network device, the terminal device may access the PSCell and/or the SCell in the source master access network device. Therefore, the second identification information indicating the source secondary access network device may specifically include the PSCell information and/or the SCell information during access of the terminal device to the source secondary access network device, that is, the source secondary access network device is indicated by using the PCell information and/or the SCell information.

Optionally, the second identification information includes identification information of the source secondary access network device.

Optionally, the second identification information includes identification information of the source secondary access network device, the PSCell information of the source secondary access network device, and the SCell information of the source secondary access network device.

A sixth aspect of embodiments of this application provides a communication method. The method is applied to a communication apparatus. The communication apparatus may be a terminal device, or may be a component (for example, a processor, a chip, a chip system, or the like) of the terminal device. In the method, when a master access network device of the terminal device is a source master access network device, the terminal device obtains a first random access report RA report, where the first RA report includes information about a random access procedure initiated by the terminal device to a source secondary access network device.

Then, after the master access network device of the terminal device changes from the source master access network device to a target access network device, the terminal device sends a first message to the target access network device, where the first message includes the first RA report and second identification information, and the second identification information indicates the source secondary access network device. The second identification information is carried in the first message in a non-container form, and the first RA report is carried in the first message in a container form.

Based on the foregoing technical solution, when the master access network device accessed by the terminal device is the source master access network device, and a secondary access network device accessed by the terminal device is the source secondary access network device, the terminal device obtains the first RA report in the random access procedure initiated to the source secondary access network device. Then, after the master access network device of the terminal device changes from the source master access network device to the target access network device, the terminal device sends the first RA report to the source secondary access network device through the target access network device. Specifically, the terminal device sends, to the target access network device, the first message that includes the first RA report and the second identification information indicating the source secondary access network device. Because a communication standard of the target access network device and a communication standard of the source secondary access network device may be the same or different, the first RA report may be carried in the first message in the container form, to ensure that the source secondary access network device can subsequently parse and obtain the first RA report, and another device does not need to parse content in a container. In addition, the second identification information may be carried in the first message in the non-container form, so that the target access network device can parse and obtain, from the first message, the second identification information used to determine the source secondary access network device. Then, the target access network device may send the first RA report to the source secondary access network device through the source master access network device based on the first identification information. Subsequently, the source secondary access network device receives the RA report and optimizes a related RA configuration based on the RA report. This improves an RA access success rate of the terminal device for the source secondary access network device.

It should be noted that, in the foregoing technical solution, the terminal device supports simultaneous access to a plurality of access network devices, that is, a plurality of access network devices simultaneously provide communication services for the terminal device, for example, in a dual-connectivity (dual-connectivity, DC) or multi-connectivity (Multi-connectivity) scenario. Dual-connectivity may also be considered as a special scenario of multi-connectivity.

In a possible implementation of the sixth aspect of embodiments of this application, the first RA report includes cell information of the source secondary access network device.

Based on the foregoing technical solution, the source secondary access network device may set a plurality of serving cells, to provide services for terminal devices in different service areas. Therefore, the cell information of the source secondary access network device included in the first RA report may enable the source secondary access network device to determine a serving cell corresponding to the first RA report and optimize an RA configuration of the serving cell.

In a possible implementation of the sixth aspect of embodiments of this application, before the terminal device sends the first message to the target access network device, the method further includes: The terminal device receives first indication information from the target access network device, where the first indication information indicates to report information about a random access procedure on a secondary access network device side.

Based on the foregoing technical solution, the terminal device may trigger, based on the first indication information that is sent by the target access network device and that indicates to report the information about the random access procedure on the secondary access network device side, sending of the first message to the target access network device, so that the terminal device knows a sending occasion for sending the first message, thereby improving communication efficiency.

Optionally, the first indication information indicates the terminal device to report information about a random access procedure of the terminal device on the secondary access network device side. The secondary access network device may be a secondary access network device historically accessed by the terminal device, for example, a secondary access network device that is last accessed one or more times, a secondary access network device that is accessed within last preset duration, or the like. This is not limited herein.

In a possible implementation of the sixth aspect of embodiments of this application, before the terminal device receives the first indication information from the target access network device, the method further includes: The terminal device sends second indication information to the target access network device, where the second indication information indicates that the terminal device has the information about the random access procedure on the secondary access network device side.

Based on the foregoing technical solution, the target access network device may trigger, based on the second indication information that is sent by the terminal device and that indicates that the terminal device has the information about the random access procedure on the secondary access network device side, the target access network device to send the first indication information. In this way, the target access network device may trigger an RA report reporting procedure for only the terminal device that has the information about the random access procedure on the secondary access network device side, to avoid unnecessary signaling consumption.

In a possible implementation of the sixth aspect of embodiments of this application, the method further includes: The terminal device obtains a second RA report, where the second RA report includes information about a random access procedure initiated by the terminal device to the source master access network device; and the terminal device sends the second RA report to the target access network device.

Optionally, the second RA report and the first RA report are carried in a same message.

Optionally, the second RA report and the first RA report are carried in different messages.

Based on the foregoing technical solution, when the master access network device of the terminal device is the source master access network device, the terminal device may further obtain the information about the random access procedure initiated by the terminal device to the source master access network device to obtain the second RA report, and send the second RA report to the source master access network device through the target access network device, so that the source master access network device subsequently receives the second RAreport and optimizes a related RA configuration based on the second RA report. This improves an RA access success rate of the terminal device for the source master access network device.

In a possible implementation of the sixth aspect of embodiments of this application, before the terminal device sends the second RA report to the target access network device, the method further includes: The terminal device receives third indication information from the target access network device, where the third indication information indicates to report information about a random access procedure on the master access network device side.

Based on the foregoing technical solution, the terminal device may trigger, based on the third indication information that is sent by the target access network device and that indicates to report the information about the random access procedure on the master access network device side, sending of the second RA report to the target access network device, so that the terminal device knows a sending occasion for sending the second RA report, thereby improving communication efficiency.

Optionally, the third indication information and the first indication information are carried in a same message sent by the target access network device to the terminal device, or the third indication information and the first indication information are carried in different messages sent by the target access network device to the terminal device.

Optionally, the third indication information indicates the terminal device to report information about a random access procedure of the terminal device on the master access network device side. The master access network device may be a master access network device historically accessed by the terminal device, for example, a master access network device that is last accessed one or more times, a master access network device that is accessed within last preset duration, or the like. This is not limited herein.

In a possible implementation of the sixth aspect of embodiments of this application, before the terminal device receives the third indication information from the target access network device, the method further includes: The terminal device sends fourth indication information to the target access network device, where the fourth indication information indicates that the terminal device has the information about the random access procedure on the master access network device side.

Based on the foregoing technical solution, the target access network device may trigger, based on the fourth indication information that is sent by the terminal device and that indicates that the terminal device has the information about the random access procedure on the master access network device side, the target access network device to send the third indication information. In this way, the target access network device may trigger an RA report reporting procedure for only the terminal device that has the information about the random access procedure on the master access network device side, to avoid unnecessary signaling consumption.

Optionally, the fourth indication information and the second indication information are carried in a same message sent by the target access network device to the terminal device, or the fourth indication information and the second indication information are carried in different messages sent by the target access network device to the terminal device.

A seventh aspect of embodiments of this application provides a communication method. The method is applied to a communication apparatus. The communication apparatus may be a target access network device, or may be a component (for example, a processor, a chip, a chip system, or the like) of the target access network device. In the method, the target access network device receives a first message from a terminal device, where the first message includes a first RA report and second identification information, the first RA report includes information about a random access procedure initiated by the terminal device to a source secondary access network device, and the second identification information indicates the source secondary access network device. The first RA report is carried in the first message in a container form, and the second identification information is carried in the first message in a non-container form. Then, the target access network device sends the first RA report to the source secondary access network device through a core network device.

Based on the foregoing technical solution, after a master access network device of the terminal device changes from a source master access network device to the target access network device, the target access network device receives, from the terminal device, the first message that includes the first RA report and the second identification information. Because a communication standard of the target access network device and a communication standard of the source secondary access network device may be the same or different, the first RA report may be carried in the first message in the container form, to ensure that the source secondary access network device can subsequently parse and obtain the first RA report, and another device does not need to parse content in a container. In addition, the second identification information may be carried in the first message in the non-container form, so that the target access network device can parse and obtain, from the first message, the second identification information used to determine the source secondary access network device. Then, the target access network device may send the first RA report to the core network device based on the second identification information, so that the core network device sends the first RA report to the source secondary access network device. Subsequently, the source secondary access network device receives the RA report, and optimizes a related RA configuration based on the RA report. This improves an RA access success rate of the terminal device for the source secondary access network device.

In a possible implementation of the seventh aspect of embodiments of this application, the first RA report includes cell information of the source secondary access network device.

Based on the foregoing technical solution, the source secondary access network device may set a plurality of serving cells, to provide services for terminal devices in different service areas. Therefore, the cell information of the source secondary access network device included in the first RA report may enable the source secondary access network device to determine a serving cell corresponding to the first RA report and optimize an RA configuration of the serving cell.

In a possible implementation of the seventh aspect of embodiments of this application, the first RA report is carried in a container form in a second message sent by the target access network device to the core network device.

Based on the foregoing technical solution, because a communication standard of the target access network device and a communication standard of the source secondary access network device may be the same or different, the first RA report may be carried in the container form in the second message sent by the target access network device to the core network device, to ensure that the source secondary access network device can subsequently parse and obtain the first RA report, and another device does not need to parse content in a container.

In a possible implementation of the seventh aspect of embodiments of this application, the second message further includes the second identification information, and the second identification information is carried in the second message in a non-container form.

Based on the foregoing technical solution, the second identification information may be carried in the non-container form in the second message sent by the target access network device to the core network device, so that the target access network device can parse and obtain, from the second message, the second identification information used to determine the source secondary access network device.

In a possible implementation of the seventh aspect of embodiments of this application, before the target access network device receives the first message from the terminal device, the method further includes: The target access network device sends first indication information to the terminal device, where the first indication information indicates to report information about a random access procedure on a secondary access network device side.

Based on the foregoing technical solution, after the target access network device sends, to the terminal device, the first indication information indicating to report the information about the random access procedure on the secondary access network device side, the terminal device may trigger, based on the first indication information, sending of the first message to the target access network device. In this way, the terminal device clearly determines a sending occasion for sending the first message, to improve communication efficiency.

Optionally, the first indication information indicates the terminal device to report information about a random access procedure of the terminal device on the secondary access network device side. The secondary access network device may be a secondary access network device historically accessed by the terminal device, for example, a secondary access network device that is last accessed one or more times, a secondary access network device that is accessed within last preset duration, or the like. This is not limited herein.

In a possible implementation of the seventh aspect of embodiments of this application, before the target access network device sends the first indication information to the terminal device, the method further includes: The target access network device receives second indication information from the terminal device, where the second indication information indicates that the terminal device has the information about the random access procedure on the secondary access network device side.

Based on the foregoing technical solution, the target access network device receives the second indication information that is sent by the terminal device and that indicates that the terminal device has the information about the random access procedure on the secondary access network device side, and may trigger, based on the second indication information, the target access network device to send the first indication information. In this way, the target access network device may trigger an RA report reporting procedure for only the terminal device that has the information about the random access procedure on the secondary access network device side, to avoid unnecessary signaling consumption.

In a possible implementation of the seventh aspect of embodiments of this application, the method further includes: The target access network device receives a second RA report from the terminal device, where the second RA report includes information about a second random access procedure, and the second random access procedure is a random access procedure initiated by the terminal device to the source master access network device; and the target access network device sends the second RA report to the source master access network device.

Optionally, the second RA report and the first RA report are carried in a same message.

Optionally, the second RA report and the first RA report are carried in different messages.

Based on the foregoing technical solution, when the master access network device of the terminal device is the source master access network device, the terminal device may further obtain the information about the random access procedure initiated by the terminal device to the source master access network device to obtain the second RA report, and send the second RA report to the source master access network device through the target access network device, so that the source master access network device subsequently receives the second RAreport and optimizes a related RA configuration based on the second RA report. This improves an RA access success rate of the terminal device for the source master access network device.

In a possible implementation of the seventh aspect of embodiments of this application, before the target access network device receives the second RA report from the terminal device, the method further includes: The target access network device sends third indication information to the terminal device, where the third indication information indicates to report information about a random access procedure on the master access network device side.

Optionally, the third indication information and the first indication information are carried in a same message sent by the target access network device to the terminal device, or the third indication information and the first indication information are carried in different messages sent by the target access network device to the terminal device.

Based on the foregoing technical solution, the target access network device sends, to the terminal device, the third indication information indicating to report the information about the random access procedure on the master access network device side. Then, the terminal device may trigger, based on the third indication information, sending of the second RA report to the target access network device. In this way, the terminal device clearly determines a sending occasion for sending the second RA report, to improve communication efficiency.

In a possible implementation of the seventh aspect of embodiments of this application, before the target access network device sends the third indication information to the terminal device, the method further includes: The target access network device receives fourth indication information from the terminal device, where the fourth indication information indicates that the terminal device has the information about the random access procedure on the master access network device side.

Based on the foregoing technical solution, the target access network device receives the fourth indication information that is sent by the terminal device and that indicates that the terminal device has the information about the random access procedure on the master access network device side, and triggers, based on the fourth indication information, sending of third indication information to the terminal device. In this way, the target access network device may trigger an RA report reporting procedure for only the terminal device that has the information about the random access procedure on the master access network device side, to avoid unnecessary signaling consumption.

Optionally, the fourth indication information and the second indication information are carried in a same message sent by the target access network device to the terminal device, or the fourth indication information and the second indication information are carried in different messages sent by the target access network device to the terminal device.

In a possible implementation of the seventh aspect of embodiments of this application, the second message further includes fifth indication information, and the fifth indication information indicates that the first RA report is an RA report of the random access procedure initiated by the terminal device to the source secondary access network device.

Based on the foregoing technical solution, the target access network device may further send the fifth indication information to the source master access network device, where the fifth indication information indicates that the first RA report includes the information about the random access procedure initiated by the terminal device to the source secondary access network device, so that a device (the core network device or the source master access network device) that receives the first RA report may determine that the first RA report is associated with the source secondary access network device.

An eighth aspect of embodiments of this application provides a communication method. The method is applied to a communication apparatus. The communication apparatus may be a core network device, or may be a component (for example, a processor, a chip, a chip system, or the like) of the core network device. In the method, the core network device receives a second message from a target access network device, where the second message includes a first RA report and second identification information, the first RA report includes information about a random access procedure initiated by a terminal device to a source secondary access network device, and the second identification information indicates the source secondary access network device. The first RA report is carried in the second message in a container form, and the second identification information is carried in the second message in a non-container form. Then, the core network device sends the first RA report to the source secondary access network device through a first access network device connected to the source secondary access network device.

Based on the foregoing technical solution, after a master access network device of the terminal device changes from a source master access network device to the target access network device, the core network device receives, from the target access network device, the second message that includes the first RA report and the second identification information. Because a communication standard of the target access network device and a communication standard of the source secondary access network device may be the same or different, the first RA report may be carried in the second message in the container form, to ensure that the source secondary access network device can subsequently parse and obtain the first RA report, and another device does not need to parse content in a container. In addition, the second identification information may be carried in the second message in the non-container form, so that the target access network device can parse and obtain, from the second message, the second identification information used to determine the source secondary access network device. Then, the core network device may determine, based on the second identification information, the first access network device connected to the source secondary access network device, and send the first RA report to the first access network device, so that the first access network device sends the first RA report to the source secondary access network device. Subsequently, the source secondary access network device receives the RA report, and optimizes a related RA configuration based on the RA report. This improves an RA access success rate of the terminal device for the source secondary access network device.

In a possible implementation of the eighth aspect of embodiments of this application, the second message further includes fifth indication information, and the fifth indication information indicates that the first RA report includes the information about the random access procedure initiated by the terminal device to the source secondary access network device.

Based on the foregoing technical solution, the core network device may further receive, by using the second message, the fifth indication information sent by the target access network device, where the fifth indication information indicates that the first RA report includes the information about the random access procedure initiated by the terminal device to the source secondary access network device, so that the core network device determines that the first RA report is associated with the source secondary access network device.

A ninth aspect of embodiments of this application provides a communication method. The method is applied to a communication apparatus. The communication apparatus may be a first access network device connected to a source secondary access network device, or may be a component (for example, a processor, a chip, a chip system, or the like) of the first access network device. In the method, the first access network device receives, from a core network device, a first RA report that is carried in a container form, where the first RA report includes information about a random access procedure initiated by a terminal device to the source secondary access network device. Then, the first access network device sends the first RA report to the source secondary access network device.

Based on the foregoing technical solution, after a master access network device of the terminal device changes from a source master access network device to the target access network device, the first access network device connected to the source secondary access network device receives the first RA report that is carried in the container form and that is from the core network device. Then, the first access network device connected to the source secondary access network device sends the first RA report to the source secondary access network device. Because a communication standard of the first access network device and a communication standard of the source secondary access network device may be the same or different, the first RA report may be carried in the container form, to ensure that the source secondary access network device can parse and obtain the first RA report, and optimize a related RA configuration based on the RA report. This improves an RA access success rate of the terminal device for the source secondary access network device.

In a possible implementation of the ninth aspect of embodiments of this application, before the first access network device sends the first RA report to the source secondary access network device, the method further includes: The first access network device receives, from the core network device, second identification information carried in a non-container form, where the second identification information indicates the source secondary access network device.

Optionally, the second identification information and the first RA report are carried in a same message.

Optionally, the second identification information and the first RA report are carried in different messages.

Based on the foregoing technical solution, the first access network device may further receive the second identification information that is sent by the core network device and that is carried in the non-container form, and send the first RA report to the source secondary access network device after determining the source secondary access network device based on the second identification information.

In a possible implementation of the ninth aspect of embodiments of this application, the first RA report includes second identification information, and the second identification information indicates the source secondary access network device.

Based on the foregoing technical solution, the source secondary access network device may set a plurality of serving cells, to provide services for terminal devices in different service areas. Therefore, the second identification information included in the first RA report may enable the source secondary access network device to determine a serving cell corresponding to the first RA report and optimize an RA configuration of the serving cell.

A tenth aspect of embodiments of this application provides a communication method, including: A source secondary access network device receives a fifth message from a first access network device, where the fifth message includes a first RA report, and the first RA report includes information about a random access procedure initiated by a terminal device to the source secondary access network device. Then, the source secondary access network device updates a configuration based on the first RA report.

Based on the foregoing technical solution, after a master access network device of the terminal device changes from the first access network device to a target access network device, the source secondary access network device receives, from the first access network device, the fifth message that includes the first RA report. Then, the source secondary access network device receives the RA report, and optimizes a related RA configuration based on the RA report. This improves an RA access success rate of the terminal device for the source secondary access network device.

In a possible implementation of the tenth aspect of embodiments of this application, the first RA report is carried in the fifth message in a container form.

Based on the foregoing technical solution, because a communication standard of the first access network device and a communication standard of the source secondary access network device may be the same or different, the first RA report may be carried in a third message in the container form, to ensure that the source secondary access network device can parse and obtain the first RA report.

In a possible implementation of the tenth aspect of embodiments of this application, the first RA report includes second identification information, and the second identification information indicates the source secondary access network device.

Based on the foregoing technical solution, the source secondary access network device may set a plurality of serving cells, to provide services for terminal devices in different service areas. Therefore, the second identification information included in the first RA report may enable the source secondary access network device to determine a serving cell corresponding to the first RA report and optimize an RA configuration of the serving cell.

In a possible implementation of any one of the sixth aspect to the tenth aspect of embodiments of this application, the target access network device and the source master access network device are a same access network device; or the target access network device and the source master access network device are different access network devices.

Based on the foregoing technical solution, a process in which the master access network device of the terminal device changes from the source master access network device to the target access network device may be a process in which the terminal device is handed over between stations. In this case, the target access network device and the source master access network device may be different access network devices. Alternatively, the process may be a process in which the terminal device exits a connected state and reestablishes a connection in an idle state. In this case, the target access network device and the source master access network device may be a same access network device, or may be different access network devices. In this way, the target access network device and the source master access network device can be flexibly implemented according to different scenarios.

In a possible implementation of any one of the sixth aspect to the tenth aspect of embodiments of this application, the first RA report includes at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a PLMN identifier, a purpose of a first random access procedure, an absolute frequency of a reference signal associated with a random access resource used in the first random access procedure, a frequency domain position associated with an uplink BWP corresponding to the random access resource used in the first random access procedure, a frequency domain position bandwidth associated with the uplink BWP corresponding to the random access resource used in the first random access procedure, a frequency domain position subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about an SSB associated with the random access resource used in the first random access procedure, and information about a CSI-RS associated with the random access resource used in the first random access procedure, where the first random access procedure is the random access procedure initiated by the terminal device to the source secondary access network device.

In a possible implementation of any one of the sixth aspect to the tenth aspect of embodiments of this application, the second identification information includes PSCell information of the source secondary access network device, and the PSCell information includes at least one of a CGI of a PSCell, a TAC of the PSCell, a PCI of the PSCell, and frequency information.

In a possible implementation of the sixth aspect of embodiments of this application, the second identification information includes PSCell information of the source secondary access network device, and the SCell information includes at least one of a CGI of an SCell, a TAC of the SCell, a PCI of the SCell, and frequency information.

Based on the foregoing technical solution, when accessing the source secondary access network device, the terminal device may access the PSCell and/or the SCell in the source master access network device. Therefore, the core network device may determine, by using the target identification information indicating the source secondary access network device, the source master access network device corresponding to the source secondary access network device. Specifically, the target identification information may include the PSCell information and/or the SCell information during access of the terminal device to the source secondary access network device, that is, the source secondary access network device is indicated by using the PCell information and/or the SCell information.

Optionally, the second identification information includes identification information of the source secondary access network device.

Optionally, the second identification information includes identification information of the source secondary access network device, the PSCell information of the source secondary access network device, and the SCell information of the source secondary access network device.

An eleventh aspect of embodiments of this application provides a communication apparatus, including a transceiver unit and a processing unit.

The processing unit is configured to obtain a first random access report RA report, where the first RA report includes information about a random access procedure initiated by a terminal device to a source secondary access network device.

The transceiver unit is configured to: after a master access network device of the terminal device changes from a source master access network device to a target access network device, send a first message to the target access network device, where the first message includes the first RA report and first identification information, and the first identification information indicates the source master access network device.

In the eleventh aspect of embodiments of this application, composition modules of the communication apparatus may be further configured to perform steps performed in the possible implementations of the first aspect. For details, refer to the first aspect. Details are not described herein again.

A twelfth aspect of embodiments of this application provides a communication apparatus, including a transceiver unit and a processing unit.

The transceiver unit is configured to receive a first message from a terminal device, where the first message includes a first RA report and first identification information, the first RA report includes information about a random access procedure initiated by the terminal device to a source secondary access network device, and the first identification information indicates a source master access network device.

The processing unit is configured to determine the source master access network device.

The transceiver unit is further configured to send the first RA report to the source secondary access network device through the source master access network device.

In the twelfth aspect of embodiments of this application, composition modules of the communication apparatus may be further configured to perform steps performed in the possible implementations of the second aspect. For details, refer to the second aspect. Details are not described herein again.

A thirteenth aspect of embodiments of this application provides a communication apparatus, including a transceiver unit and a processing unit.

The transceiver unit is configured to receive a third message from a target access network device, where the third message includes a first RA report and target identification information, the first RA report includes information about a random access procedure initiated by a terminal device to a source secondary access network device, and the target identification information is used to determine a source master access network device.

The processing unit is configured to determine the source master access network device.

The transceiver unit is further configured to send the first RA report to the source secondary access network device through the source master access network device.

In the thirteenth aspect of embodiments of this application, composition modules of the communication apparatus may be further configured to perform steps performed in the possible implementations of the third aspect. For details, refer to the third aspect. Details are not described herein again.

A fourteenth aspect of embodiments of this application provides a communication apparatus, including a transceiver unit and a processing unit.

The transceiver unit is configured to receive, from a target access network device, a first RA report that is carried in a container form, where the first RA report includes information about a random access procedure initiated by a terminal device to a source secondary access network device.

The processing unit is configured to determine the source secondary access network device.

The transceiver unit is further configured to send the first RA report to the source secondary access network device.

In the fourteenth aspect of embodiments of this application, composition modules of the communication apparatus may be further configured to perform steps performed in the possible implementations of the fourth aspect. For details, refer to the fourth aspect. Details are not described herein again.

A fifteenth aspect of embodiments of this application provides a communication apparatus, including a transceiver unit and a processing unit.

The transceiver unit is configured to receive a fifth message from a source master access network device, where the fifth message includes a first RA report, and the first RA report includes information about a random access procedure initiated by a terminal device to a source secondary access network device.

The processing unit is configured to update a configuration based on the first RA report.

In the fifteenth aspect of embodiments of this application, composition modules of the communication apparatus may be further configured to perform steps performed in the possible implementations of the fifth aspect. For details, refer to the fifth aspect. Details are not described herein again.

A sixteenth aspect of embodiments of this application provides a communication apparatus, including a transceiver unit and a processing unit.

The processing unit is configured to obtain a first random access report RA report, where the first RA report includes information about a random access procedure initiated by the terminal device to a source secondary access network device.

The transceiver unit is configured to: after a master access network device of the terminal device changes from a source master access network device to a target access network device, send, by the terminal device, a first message to the target access network device, where the first message includes the first RA report and second identification information, and the second identification information indicates the source secondary access network device. The second identification information is carried in the first message in a non-container form, and the first RA report is carried in the first message in a container form.

In the sixteenth aspect of embodiments of this application, composition modules of the communication apparatus may be further configured to perform steps performed in the possible implementations of the sixth aspect. For details, refer to the sixth aspect. Details are not described herein again.

A seventeenth aspect of embodiments of this application provides a communication apparatus, including a transceiver unit and a processing unit.

The transceiver unit is configured to receive a first message from a terminal device, where the first message includes a first RA report and second identification information, the first RA report includes information about a random access procedure initiated by the terminal device to a source secondary access network device, and the second identification information indicates the source secondary access network device. The first RA report is carried in the first message in a container form, and the second identification information is carried in the first message in a non-container form.

The processing unit is configured to determine the source secondary access network device based on the second identification information.

The transceiver unit is further configured to send the first RA report to the source secondary access network device through a core network device.

In the seventeenth aspect of embodiments of this application, composition modules of the communication apparatus may be further configured to perform steps performed in the possible implementations of the seventh aspect. For details, refer to the seventh aspect. Details are not described herein again.

An eighteenth aspect of embodiments of this application provides a communication apparatus, including a transceiver unit and a processing unit.

The transceiver unit is configured to receive a second message from a target access network device, where the second message includes a first RA report and second identification information, the first RA report includes information about a random access procedure initiated by a terminal device to a source secondary access network device, and the second identification information indicates the source secondary access network device. The first RA report is carried in the second message in a container form, and the second identification information is carried in the second message in a non-container form.

The processing unit is configured to determine a first access network device connected to the source secondary access network device.

The transceiver unit is further configured to send the first RA report to the source secondary access network device through the first access network device.

In the eighteenth aspect of embodiments of this application, composition modules of the communication apparatus may be further configured to perform steps performed in the possible implementations of the eighth aspect. For details, refer to the eighth aspect. Details are not described herein again.

A nineteenth aspect of embodiments of this application provides a communication apparatus, including a transceiver unit and a processing unit.

The transceiver unit is configured to receive, from a core network device, a first RA report that is carried in a container form, where the first RA report includes information about a random access procedure initiated by a terminal device to a source secondary access network device.

The processing unit is configured to determine the source secondary access network device.

The transceiver unit is further configured to send the first RA report to the source secondary access network device.

In the nineteenth aspect of embodiments of this application, composition modules of the communication apparatus may be further configured to perform steps performed in the possible implementations of the ninth aspect. For details, refer to the ninth aspect. Details are not described herein again.

A twentieth aspect of embodiments of this application provides a communication apparatus, including a transceiver unit and a processing unit.

The transceiver unit is configured to receive a fifth message from a first access network device, where the fifth message includes a first RA report, and the first RA report includes information about a random access procedure initiated by a terminal device to a source secondary access network device.

The processing unit is configured to update a configuration based on the first RA report.

In the twentieth aspect of embodiments of this application, composition modules of the communication apparatus may be further configured to perform steps performed in the possible implementations of the tenth aspect. For details, refer to the tenth aspect. Details are not described herein again.

A twenty-first aspect of embodiments of this application provides a communication method. The method is applied to a communication apparatus. The communication apparatus may be a terminal device, or may be a component (for example, a processor, a chip, a chip system, or the like) of the terminal device. In the method, the terminal device obtains information for requesting on demand system information (on demand system information, on demand SI). Then, the terminal device sends the information for requesting the on demand SI to an access network device. Failure information of requesting the on demand SI includes at least one of the following:
an information type of the on demand SI;
first indication information, where the first indication information indicates whether the terminal device receives a correct response for the on demand SI;
current position information of the terminal device;
second indication information, where the second indication information indicates whether the on demand SI is area-specific system information; or
third indication information, indicating whether the terminal device attempts to receive the requested system information.

Based on the foregoing technical solution, in a process in which the terminal device requests the on demand SI from the access network device, if the terminal device detects that the on demand SI fails to be requested, the terminal device obtains the failure information of requesting the on demand SI, and sends the failure information of requesting the on demand SI to the access network device. In this way, the access network device optimizes related configuration information of the on demand SI based on the failure information of requesting the on demand SI, to increase a success rate of obtaining the on demand SI by the terminal device from the access network device, and improve communication efficiency.

A twenty-second aspect of embodiments of this application provides a communication method. The method is applied to a communication apparatus. The communication apparatus may be a target access network device, or may be a component (for example, a processor, a chip, a chip system, or the like) of the target access network device. In the method, an access network device receives, from a terminal device, information for requesting on demand SI. Then, the access network device updates a configuration based on the information for requesting the on demand SI. Failure information of requesting the on demand SI includes at least one of the following:
an information type of the on demand SI;
first indication information, where the first indication information indicates whether the terminal device receives a correct response for the on demand SI;
current position information of the terminal device;
second indication information, where the second indication information indicates whether the on demand SI is area-specific system information; or
third indication information, indicating whether the terminal device attempts to receive the requested system information.

Based on the foregoing technical solution, in a process in which the terminal device requests the on demand SI from the access network device, if the terminal device detects that the on demand SI fails to be requested, the terminal device obtains the failure information of requesting the on demand SI, and sends the failure information of requesting the on demand SI to the access network device. In this way, the access network device optimizes related configuration information of the on demand SI based on the failure information of requesting the on demand SI, to increase a success rate of obtaining the on demand SI by the terminal device from the access network device, and improve communication efficiency.

A twenty-third aspect of embodiments of this application provides a communication apparatus, including a transceiver unit and a processing unit.

The processing unit is configured to obtain information for requesting on demand SI.

The transceiver unit is configured to send the information for requesting the on demand SI to an access network device.

Failure information of requesting the on demand SI includes at least one of the following:
an information type of the on demand SI;
first indication information, where the first indication information indicates whether the terminal device receives a correct response for the on demand SI;
current position information of the terminal device;
second indication information, where the second indication information indicates whether the on demand SI is area-specific system information; or
third indication information, indicating whether the terminal device attempts to receive the requested system information.

In the twenty-third aspect of embodiments of this application, composition modules of the communication apparatus may be further configured to perform steps performed in the possible implementations of the twenty-first aspect. For details, refer to the twenty-first aspect. Details are not described herein again.

A twenty-fourth aspect of embodiments of this application provides a communication apparatus, including a transceiver unit and a processing unit.

The transceiver unit is configured to receive, from a terminal device, information for requesting on demand SI.

The processing unit is configured to update a configuration based on the information for requesting the on demand SI.

Failure information of requesting the on demand SI includes at least one of the following:
an information type of the on demand SI;
first indication information, where the first indication information indicates whether the terminal device receives a correct response for the on demand SI;
current position information of the terminal device;
second indication information, where the second indication information indicates whether the on demand SI is area-specific system information; or
third indication information, indicating whether the terminal device attempts to receive the requested system information.

In the twenty-fourth aspect of embodiments of this application, composition modules of the communication apparatus may be further configured to perform steps performed in the possible implementations of the twenty-second aspect. For details, refer to the twenty-second aspect. Details are not described herein again.

A twenty-fifth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the terminal device in any one of the first aspect, the sixth aspect, the twenty-first aspect, or the possible implementations thereof.

A twenty-sixth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the target access network device in any one of the second aspect, the seventh aspect, or the possible implementations thereof.

A twenty-seventh aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the source master access network device in any one of the third aspect, the eighth aspect, or the possible implementations thereof.

A twenty-eighth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the source secondary access network device in any one of the fourth aspect, the ninth aspect, or the possible implementations thereof.

A twenty-ninth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the core network device in any one of the fifth aspect, the tenth aspect, or the possible implementations thereof.

A thirtieth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method performed by the access network device in any one of the twenty-second aspect or the possible implementations thereof.

A thirty-first aspect of embodiments of this application provides a computer-readable storage medium that stores one or more computer-executable instructions. When the computer-executable instructions are executed by a processor, the processor performs the method in any one of the first aspect to the tenth aspect, the twenty-first aspect and the twenty-second aspect, or the possible implementations thereof.

A thirty-second aspect of embodiments of this application provides a computer program product (or referred to as a computer program) that stores one or more computers. When the computer program product is executed by a processor, the processor performs the method in any one of the first aspect to the tenth aspect, the twenty-first aspect and the twenty-second aspect, or the possible implementations thereof.

A thirty-third aspect of embodiments of this application provides a chip system. The chip system includes at least one processor, configured to support a communication apparatus in implementing the function in any one of the first aspect to the tenth aspect, the twenty-first aspect and the twenty-second aspect, or the possible implementations thereof.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A thirty-fourth aspect of embodiments of this application provides a communication system. The communication system includes at least one communication apparatus in any one of the eleventh aspect to the twentieth aspect, the twenty-third aspect to the twenty-ninth aspect, or the possible implementations thereof.

For technical effects brought by any one of the eleventh aspect to the twentieth aspect, the twenty-fifth aspect to the thirty-fourth aspect, or the possible implementations thereof, refer to the technical effects brought by any one of the first aspect to the tenth aspect or the possible implementations thereof. Details are not described herein again.

For technical effects brought by any one of the twenty-third aspect and the twenty-fourth aspect, the twenty-fifth aspect to the thirty-fourth aspect, or the possible implementations thereof, refer to the technical effects brought by any one of the twenty-first aspect and the twenty-second aspect or the possible implementations thereof. Details are not described herein again.

It can be learned from the foregoing technical solutions that embodiments of this application have the following technical effects: When the master access network device accessed by the terminal device is the source master access network device, and a secondary access network device accessed by the terminal device is the source secondary access network device, the terminal device obtains the first RA report in the random access procedure initiated to the source secondary access network device. Then, after the master access network device of the terminal device changes from the source master access network device to the target access network device, the terminal device sends the first RA report to the source secondary access network device through the target access network device. Specifically, the terminal device sends, to the target access network device, the first message that includes the first RA report and the first identification information indicating the source master access network device, so that the target access network device can send the first RA report to the source secondary access network device through the source master access network device based on the first identification information, and subsequently the source secondary access network device receives the RA report and optimizes a related RA configuration based on the RA report. This improves an RA access success rate of the terminal device for the source secondary access network device.

### BRIEF DESCRIPTION OF DRAWINGS

FIG. 1a is a schematic diagram of a framework of a communication system according to an embodiment of this application;
FIG. 1b is a schematic diagram of a framework of a communication system according to an embodiment of this application;
FIG. 2a is a schematic diagram of a framework of a communication system according to an embodiment of this application;
FIG. 2b is a schematic diagram of a framework of a communication system according to an embodiment of this application;
FIG. 2c is a schematic diagram of a framework of a communication system according to an embodiment of this application;
FIG. 3 is another schematic diagram of an RA procedure according to an embodiment of this application;
FIG. 4 is another schematic diagram of an RA procedure according to an embodiment of this application;
FIG. 5 is another schematic diagram of an RA procedure according to an embodiment of this application;
FIG. 6 is another schematic diagram of an RA procedure according to an embodiment of this application;
FIG. 7 is another schematic diagram of an RA procedure according to an embodiment of this application;
FIG. 8a is a schematic diagram of a communication method according to an embodiment of this application;
FIG. 8b is a schematic diagram of a communication method according to an embodiment of this application;
FIG. 9a is another schematic diagram of a communication method according to an embodiment of this application;
FIG. 9b is another schematic diagram of a communication method according to an embodiment of this application;
FIG. 10 is another schematic diagram of a communication method according to an embodiment of this application;
FIG. 11 is a schematic diagram of a communication apparatus according to an embodiment of this application;
FIG. 12 is another schematic diagram of a communication apparatus according to an embodiment of this application;
FIG. 13 is another schematic diagram of a communication apparatus according to an embodiment of this application; and
FIG. 14 is another schematic diagram of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

First, some terms in embodiments of this application are explained and described, to facilitate understanding of a person skilled in the art.
(1) Terminal device: may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or the Internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The terminal may have a plurality of subscriber identity module (subscriber identity module, SIM) cards. Alternatively, the terminal device may be a wearable device, a terminal device in a next-generation communication system, for example, a 5G communication system, a terminal device in a future evolved public land mobile network (public land mobile network, PLMN), or the like.

(2) Access network device: is a radio access network (radio access network, RAN) node (or device) that enables a terminal to access a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like.

In addition, in a network structure, an access network device may include a central unit (centralized unit, CU) node, a distributed unit (distributed unit, DU) node, or a RAN device including a CU node and a DU node. The RAN device including the CU node and the DU node separates protocol layers. Functions of some protocol layers are controlled by the CU in a centralized manner. Functions of some or all remaining protocol layers are distributed in the DU, and the CU controls the DU in a centralized manner. In an implementation, as shown in FIG. la, a radio resource control (radio Resource Control, RRC) layer, a PDCP layer, and a service data adaptation protocol (service data adaptation protocol, SDAP) layer in a protocol stack are deployed on the CU. A radio link control (radio link control, RLC) layer, a media access control (media access control, MAC) layer, and a physical layer (physical layer, PHY) in the protocol stack are deployed on the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different function entities, and the CU-CP and the CU-UP may be coupled to the DU, to jointly implement a function of a base station. In a possible manner, the CU-CP is responsible for a control plane function, and mainly includes RRC and PDCP-C. PDCP-C is mainly responsible for encryption and decryption of control plane data, integrity protection, data transmission, and the like. The CU-UP is responsible for a user plane function, and mainly includes SDAP and PDCP-U. SDAP is mainly responsible for processing data of a core network and mapping a data flow (flow) to a bearer. PDCP-U is mainly responsible for encryption and decryption of a data plane, integrity protection, header compression, sequence number maintenance, data transmission, and the like. The CU-CP and the CU-UP are connected through an E1 interface. The CU-CP represents the RAN device and is connected to a core network through an Ng interface, and is connected to the DU through F1-C (control plane). The CU-UP is connected to the DU through F1-U (user plane). Certainly, in another possible implementation, PDCP-C is also on the CU-UP. It should be noted that, the CU and the DU are merely names, and the central unit and the distributed unit may have other names. This is not limited in the present invention.

(3) Core network device: is a device in a core network (core network, CN) that provides service support for a terminal. Currently, examples of some core network devices are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, the entity in this application may also be referred to as a network element or a function entity. For example, the AMF entity may also be referred to as an AMF network element or an AMF function entity. For another example, the SMF entity may also be referred to as an SMF network element, an SMF function entity, or the like.

(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device may include the foregoing access network device and/or core network device. Specifically, the network device serves as a configuration information sending entity, and the terminal device serves as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active state (ACTIVE, which may also be denoted as RRC_CONNECTED), or may be applied to a terminal device in a non-connected state (INACTIVE, which may also be denoted as RRC_INACTIVE) or an idle state (IDLE, which may also be denoted as RRC_IDLE).

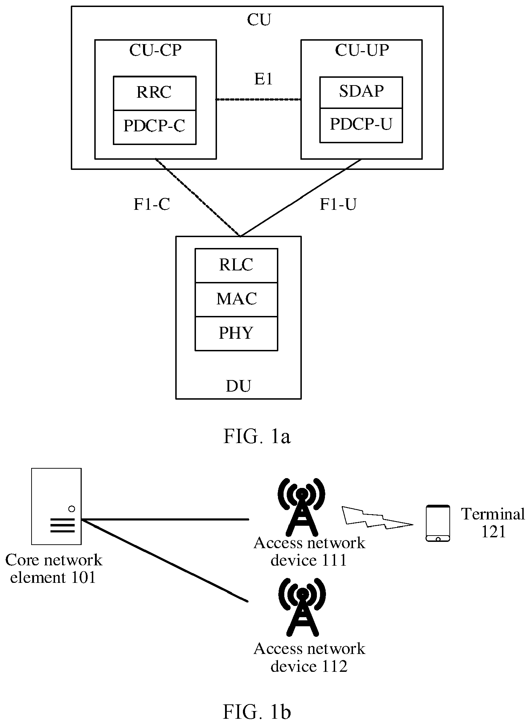

The technical solutions in embodiments of this application are applicable to a communication system shown in FIG. 1b. The communication system includes a core network element 101, an access network device 111, and an access network device 112. The core network element 101 may be connected to the access network device 111 and the access network device 112. A terminal 121 may communicate with the access network device 111. It should be noted that, the core network device, the access network device, and the terminal included in the communication system shown in FIG. 1b are merely examples, and an interface connection relationship between the base stations is also merely an example. In embodiments of this application, types and a quantity of network elements included in the communication system, and a connection relationship between network elements are not limited thereto.

The communication system may be a communication system that supports a 4th generation (fourth generation, 4G) access technology, for example, a long term evolution (long term evolution, LTE) access technology. Alternatively, the communication system may be a communication system that supports a 5th generation (fifth generation, 5G) access technology, for example, a new radio (new radio, NR) access technology. Alternatively, the communication system may be a communication system that supports a 3rd generation (third generation, 3G) access technology, for example, a universal mobile telecommunications system (universal mobile telecommunications system, UMTS) access technology. Alternatively, the communication system may be a communication system that supports a 2nd generation (second generation, 2G) access technology, for example, a global system for mobile communications (global system for mobile communications, GSM) access technology. Alternatively, the communication system may be a communication system that supports a plurality of wireless technologies, for example, a communication system that supports an LTE technology and an NR technology. In addition, the communication system may also be applicable to a future-oriented communication technology.

Currently, to improve communication experience of a terminal device, a plurality of network devices may provide communication services for a same terminal device, that is, one terminal device may communicate with a plurality of network devices. Communication between the terminal device and two access network devices in the scenario shown in FIG. 1b is used as an example. The scenario is referred to as a dual-connectivity (dual-connectivity, DC) or multi-connectivity (Multi-connectivity) scenario. DC may also be referred to as multi-radio dual connectivity (multi-radio dual connectivity, MR-DC). DC may be considered as a special implementation form in the multi-connectivity scenario.

MR-DC includes a plurality of implementation forms, for example, new radio dual connectivity (new radio dual connectivity, NR-DC), evolved universal terrestrial radio access-new radio-dual connectivity (E-UTRA-NR dual connectivity, EN-DC), new radio-evolved universal terrestrial radio access-dual connectivity (NR-E-UTRA dual connectivity, NE-DC), and next generation evolved universal terrestrial radio access network-new radio dual connectivity (next generation EUTRAN-NR dual connection, NGEN-DC). Specifically, in EN-DC, a master access network device is an LTE access network device eNB connected to a 4G core network EPC, and a secondary access network device is an NR access network device. In NGEN-DC, a master access network device is an LTE access network device ng-eNB connected to a 5G core network 5GC, and a secondary access network device is an NR access network device. In NE-DC, a master access network device is an NR access network device connected to a 5G core network (5G Core, 5GC), and a secondary access network device is an LTE access network device. In NR-DC, a master access network device is an NR access network device connected to a 5G core network 5GC, and a secondary access network device is an NR access network device. In addition, EN-DC is sometimes referred to as non-standalone (non-standalone, NSA) because in a 5G initial phase, a terminal device in an EN-DC network cannot camp on an NR cell. An NR access network device on which a terminal device can camp is also sometimes referred to as a standalone (standalone, SA) NR access network device.

Specifically, a plurality of access network devices connected to a terminal device may be access network devices belonging to a same RAT (for example, are all 4G access network devices or are all 5G access network devices), or may be access network devices of different RATs (for example, one is a 4G access network device, and another is a 5G access network device). A network side may provide a communication service for the terminal device by using resources of the plurality of access network devices, to provide high-rate transmission for the terminal device. An access network device that is in DC and that exchanges control plane signaling with a core network is referred to as a master access network device, or may be referred to as a master node (master node, MN), a master base station, or the like. Another access network device is referred to as a secondary access network device, or may be referred to as a secondary node (secondary node, SN), a secondary base station, or the like. Generally, each access network device has a different RLC/MAC entity. DRBs in DC are classified into a master cell group bearer (master cell group bearer, MCG bearer), a secondary cell group bearer (secondary cell group bearer, SCG bearer), and a split bearer (split bearer). The MCG bearer indicates that an RLC/MAC entity of the DRB is on only a master access network device, the SCG bearer indicates that an RLC/MAC entity of the DRB is on only a secondary access network device, and the split bearer indicates that an RLC/MAC entity of the DRB is on both a master access network device and a secondary access network device. A bearer whose PDCP is terminated on an MN is referred to as an MN terminated MCG bearer (MN terminated MCG bearer). To be specific, DL data directly arrives at the MN from a core network, and is sent to a terminal device through RLC/MAC after being processed by PDCP/SDAP of the MN, and UL data is sent to the core network after being processed by PDCP/SDAP of the MN. Similarly, a bearer whose PDCP is terminated on an SN is referred to as an MN terminated SCG bearer (MN terminated SCG bearer). To be specific, DL data directly arrives at the SN from a core network, and is sent to a terminal device through RLC/MAC after being processed by PDCP/SDAP of the SN, and UL data is sent to the core network after being processed by PDCP/SDAP of the SN.

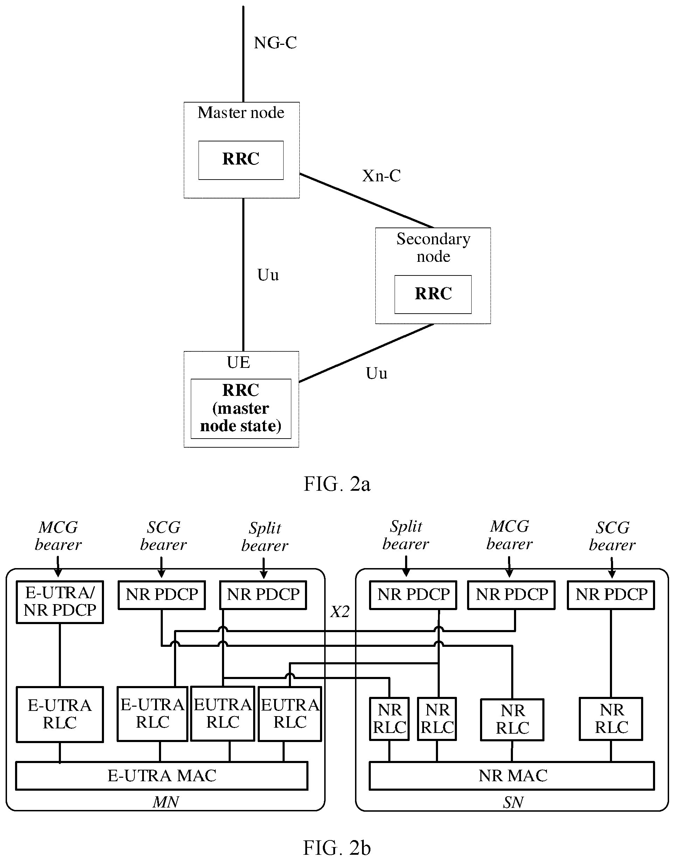

In an implementation example, as shown in FIG. 2a, in dual connectivity, an interface between a master access network device (master node) and a secondary access network device (secondary node) is referred to as Xn-C, and an interface between the master access network device and a core network device is referred to as NG-C. In addition, there is a Uu interface connection between a terminal device (UE) and each of the master access network device and the secondary access network device. The master access network device and the core network device each have an RRC entity, and each can generate an RRC message (that is, a control message, for example, a measurement message). In addition, the secondary access network device may directly send an RRC message generated by the secondary access network device to the terminal device (in this case, an RRC message sent by the terminal device to the secondary access network device is also directly sent to the secondary access network device, and the RRC message between the secondary access network device and the terminal device is referred to as SRB3). Alternatively, an RRC message generated by the secondary access network device may be notified to the master access network device, and then the master access network device sends the RRC message to the terminal device (in this case, the terminal device also sends RRC messages for the secondary access network device to the secondary access network device through the master access network device, that is, the terminal device sends the RRC messages to the master access network device, and then the master access network device forwards the messages to the secondary access network device).

For a terminal device in MR-DC, a user plane of the secondary access network device may be connected to a core network connected to the master access network device (that is, the core network may directly send data to the terminal device through the secondary access network device). In addition, in MR-DC, there is a primary cell (PCell) in the master access network device, and there is a primary secondary cell (PSCell) in the secondary access network device. The primary cell is a cell that is deployed at a dominant frequency and in which the terminal device initiates an initial connection establishment process or a connection reestablishment process, or a cell indicated as a primary cell in a handover process. The primary secondary cell is a cell in which the terminal device initiates a random access procedure on the secondary access network device, a cell in which the terminal device skips a random access procedure and initiates data transmission in a secondary access network device change process, or a cell in which the terminal device initiates random access on the secondary access network device in a process of performing reconfiguration with synchronization.

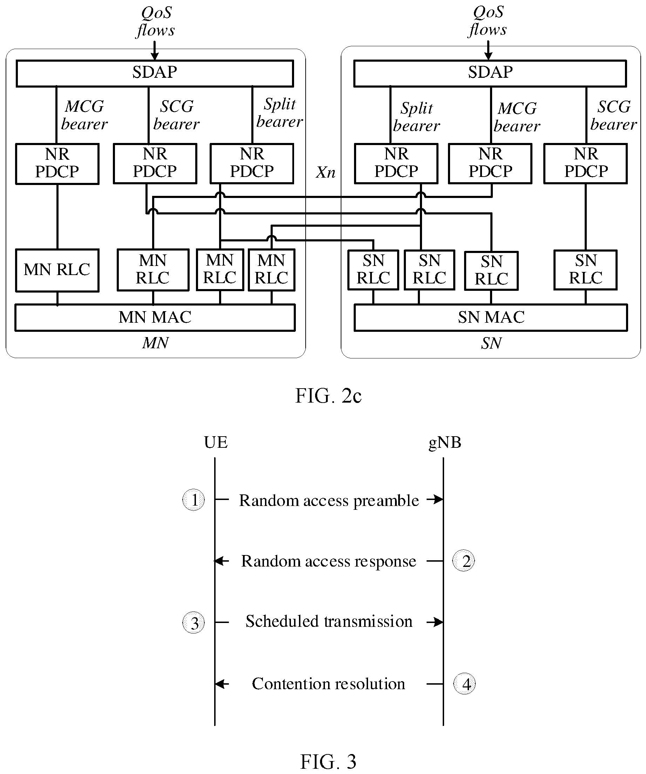

For example, FIG. 2b provides a user plane protocol stack in EN-DC on a network side, and is specifically a schematic diagram of a protocol stack for an MCG bearer, an SCG bearer, and a split bearer on a network side in EN-DC. For example, FIG. 2c provides a user plane protocol stack in MR-DC with 5GC, and is specifically a schematic diagram of a protocol stack for an MCG bearer, an SCG bearer, and a split bearer on a network side in NGEN-DC/NE-DC/NR-DC. Transmission of each bearer needs to be processed by PDCP/SDAP and RLC/MAC.

The foregoing describes a plurality of different communication scenarios to which this application is applied, and the following further describes random access procedures in different communication scenarios.

In a wireless communication network, a terminal device may initiate random access on a random access channel (random access channel, RACH), to implement uplink synchronization, and further obtain information required for communicating with a network device. This process is referred to as a random access procedure, a RACH procedure, or an RA procedure.

Using LTE/NR as an example, the terminal device may achieve the following objectives by using the random access procedure: obtaining a cell radio network temporary identifier C-RNTI (cell radio network temporary identifier, C-RNTI), obtaining timing advance (timing advance, TA) information, obtaining an uplink grant (uplink grant, UL grant), and the like, to implement uplink synchronization.

Generally, depending on whether the random access procedure is based on contention, there are two different manners:
1. contention based random access (Contention based RA, CBRA); and
2. non-contention based random access (Non-Contention based or Contention-Free based RA, CFRA).

According to steps in random access procedures, the random access procedures may be further classified into:
1. a 4-step random access procedure (4-step RACH); and
2. a 2-step random access procedure (2-step RACH).

For example, FIG. 3 is a schematic diagram of 4-step CBRA implementation in an NR system. An example in which a terminal device is UE and an access network device is a base station (gNB) is used below for description.

In FIG. 3, first, the UE receives 4-step RACH configuration information sent by the network device, for example, including configuration information such as preamble (preamble) configuration information, time-frequency resource configuration information, a maximum quantity of random access preamble (preamble) transmission times, and the like. Then, the UE and the base station need to complete the process in four steps.
1. The UE sends a random access preamble (Random Access Preamble) to the gNB.

Specifically, a main function of the preamble is to notify the base station that there is a random access request, and enable the base station to estimate a transmission delay between the base station and the UE, so that the base station calibrates uplink timing, and notifies the UE of calibration information in step 2. For example, in CBRA, the UE selects a preamble, and in CFRA, the UE may perform transmission on a physical random access channel (physical random access channel, PRACH) based on a preamble specified by the base station. Specifically, for example, the base station may notify, by using a system message or an RRC message, the UE of preamble information (for example, at least one preamble index), and information about a time-frequency resource that can be used to transmit the preamble. Then, the UE may send the preamble on a PRACH time-frequency resource.

2. The gNB sends a random access response (Random Access Response, RAR) to the UE.

Specifically, after receiving the preamble sent by the UE, the base station sends the corresponding random access response (RA response, RAR) to the UE. The random access response may be briefly referred to as a message 2 (MSG 2) below, may include a preamble identifier, TA information, and an uplink grant (Uplink grant, UL grant) information, and may further carry a temporary identifier of the UE.

For CBRA, after receiving the RAR, the UE determines whether the preamble identifier in the RAR is the same as a preamble identifier corresponding to the preamble sent in step 1. If the preamble identifiers are the same, it is considered that the RAR is successfully received; or if the preamble identifiers are not the same, it is considered that the RAR fails to be received, and the UE may re-trigger an RA procedure. For CFRA, the preamble is specific to UE and therefore there is no conflict. In addition, because the UE already has a unique identifier C-RNTI in an access cell, the base station does not need to allocate a C-RNTI to the UE. Therefore, step 3 and step 4 are required for only CBRA.

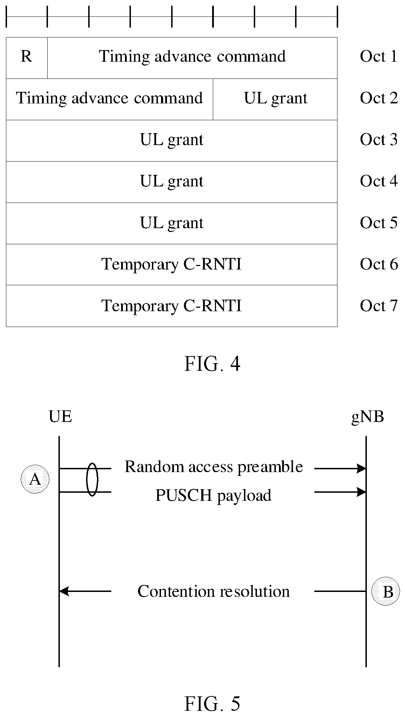

A possible RAR format is shown in FIG. 4, and includes:
a. R: which is a reserved bit;
b. Timing Advance Command: which is a timing advance command, and is used to indicate uplink timing advance of the UE;
c. UL grant: which is uplink grant information; and
d. Temporary C-RNTI: which is a temporary cell radio access identifier allocated by a network side to the UE.

3. The UE sends scheduling-based transmission information (scheduled transmission) to the gNB.

Specifically, the UE sends data through a physical uplink shared channel (Physical Uplink Shared Channel, PUSCH) on a corresponding uplink transmission resource based on the UL grant information indicated in the RAR, where the sent data may include a radio resource control (Radio Resource Control, RRC) message and UE identification information, for example, C-RNTI information of the UE, a resume identifier (Resume ID), an inactive identifier (Inactive RNTI, I-RNTI) of the UE, or the like. The identifier reported by the UE is used by the base station to identify an identity of the UE and related context information. The RRC message may be sent to the base station after processing at each layer of a protocol stack is completed by using a signaling radio bearer (Signaling Radio Bearer, SRB), and may be briefly referred to as a message 3 (MSG 3) below.

4. The gNB sends contention resolution (contention resolution) information to the UE.

In step 3, the UE adds the UE identification information or the RRC message sent by the UE. Therefore, in a conflict resolution mechanism, the base station uses step 4, which may be briefly referred to as a message 4 (MSG 4) below, to carry the UE identification information or the RRC message sent by the UE, to specify UE that wins conflict resolution. Other UE that does not win the conflict resolution initiates random access again.

For another example, FIG. 5 is a schematic diagram of 2-step CBRA implementation in an NR system. UE and a base station need to complete RA in two steps. An example in which a terminal device is UE and an access network device is a base station (gNB) is used below for description.

In FIG. 3, first, the UE receives 2-step RACH configuration information sent by the network device. The configuration information may include preamble information, PUSCH information, and a correspondence between the preamble information and the PUSCH information. The correspondence may be a one-to-one correspondence, a many-to-one correspondence, or a one-to-many correspondence. In addition, a maximum quantity of 2-step transmission times (or a maximum quantity of MSG A transmission times) is configured on a network side.
1. The UE sends a MSG A to the gNB, including a 2-step RACH preamble and data (that is, the PUSCH payload shown in the figure) sent on a PUSCH corresponding to the preamble (that is, the random access preamble shown in the figure).
2. The UE receives a MSG B, including contention resolution (contention resolution) information. If conflict resolution succeeds, the UE terminates the RACH procedure.

Specifically, the MSG B usually includes RARs for one or more users. The RARs are classified into a success random access response (SuccessRAR) and a fallback random access response (FallbackRAR). A MAC layer indicates a specific RAR. It may be understood that the indication may be referred to as a fallback indication. If the SuccessRAR carries a contention resolution ID (CR ID), it indicates that the base station detects the preamble and correctly decodes the data. If the CR ID is consistent with content sent by the UE in the MSG A, it is considered that contention resolution succeeds. A format of the FallbackRAR is similar to that of a MSG 2, and it indicates that the base station detects the preamble but does not correctly decode the data.

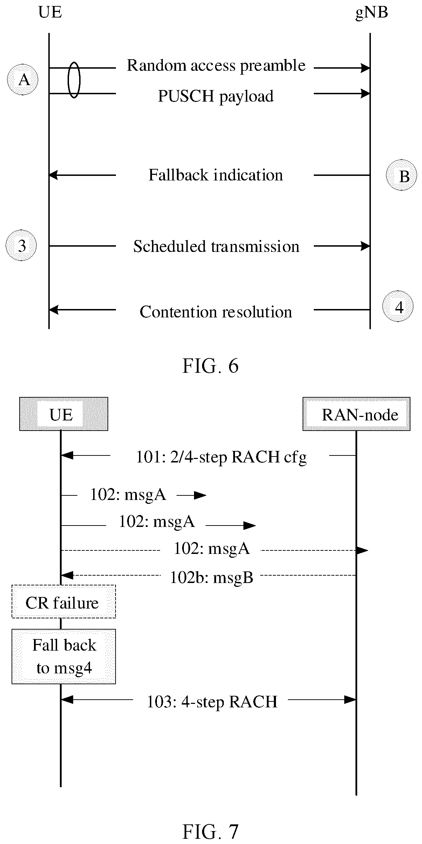

There may be the following two fallback mechanisms from 2-step RACH to 4-step RACH.
1. Explicit mechanism: The UE receives a fallback indication (Fallback Indication) in the MSG B, and the UE falls back to the 4-step RACH procedure, that is, the UE sends a MSG 3 (as shown in FIG. 6). For example, if the gNB receives a 2-step preamble but cannot decode a corresponding PUSCH, the gNB may send a MSG B to indicate the UE to fall back from 2-step RACH to 4-step RACH.
2. Implicit mechanism: If the UE fails to perform 2-step RACH, the UE may also fall back to 4-step RACH (as shown in FIG. 7). For example, when a quantity of times that the UE sends a MSG A in step 102 reaches the maximum quantity of MSG A transmission times but does not reach a maximum quantity of RLF times (for example, a quantity of times that the UE sends a preamble does not reach a maximum quantity of preamble transmission times), if RACH is still unsuccessful, the UE falls back to 4-step RACH.

After the UE falls back to 4-step RACH, the quantity of preamble transmission times continues to be accumulated until the maximum quantity of RLF times is reached.

The following uses an implicit fallback mechanism of UE in a connected state in a handover scenario as an example for specific description.

Case 1: If a handover message (for example, the handover (handover, HO) message may be an RRC reconfiguration message) includes only 2-step CFRA resource information (for example, the 2-step CFRA resource information may include a preamble index, a time-frequency resource, PUSCH resource information, and the like associated with a beam, and the handover message may further include a first signal quality threshold (for example, X), a maximum quantity of MSG A transmission times, and a maximum quantity of preamble transmission times), there may be the following case.
(1) If a beam (for example, a beam 1) whose signal quality is higher than X and that is configured with 2-step CFRA resource information exists in a target cell, the UE performs 2-step CFRA by using the beam. If 2-step CFRA performed by the UE with the beam fails, the UE preferentially selects a beam whose signal quality is higher than X and that is configured with 2-step CFRA resource information in the target cell, until 2-step CFRA succeeds, no beam whose signal quality is higher than X and that is configured with 2-step CFRA resource information exists in the target cell, or a total quantity of MSG A transmission times reaches the maximum quantity of MSG A transmission times.
(2) Further, if no beam whose signal quality is higher than X and that is configured with 2-step CFRA resource information exists in the target cell, and the total quantity of times that the UE sends the MSG A does not reach the maximum quantity of MSG A transmission times, the UE preferentially selects a beam whose signal quality is higher than X to perform 2-step CBRA. If 2-step CBRA performed by the UE with the selected beam whose signal quality is higher than X fails, the UE preferentially selects a beam whose signal quality is higher than X in the target cell, until 2-step CBRA succeeds, no beam whose signal quality is higher than X exists in the target cell, or a total quantity of MSG A transmission times reaches the maximum quantity of MSG A transmission times.
(3) Further, if no beam whose signal quality is higher than X exists in the target cell, and the total quantity of times that the UE sends the MSG A does not reach the maximum quantity of MSG A transmission times, the UE may randomly select a beam to perform 2-step CBRA. If 2-step CBRA performed by the UE with the beam fails, the UE randomly selects a beam again, until 2-step CBRA succeeds or a total quantity of MSG A transmission times reaches the maximum quantity of MSG A transmission times.
(4) Further, when the total quantity of MSG A transmission times reaches the maximum quantity of MSG A transmission times, if the UE still does not successfully complete the random access procedure with the target cell, but a total quantity of preamble transmission times does not reach the maximum quantity of preamble transmission times, the UE performs 4-step CBRA.
(5) If no beam whose signal quality is higher than X and that is configured with 2-step CFRA resource information exists in the target cell, the UE preferentially selects a beam whose signal quality is higher than X to perform 2-step CBRA. For example, if a beam whose signal quality is higher than X exists in the target cell, the UE performs 2-step CBRA by using the beam. If 2-step CBRA performed by the UE with the selected beam whose signal quality is higher than X fails, the UE preferentially selects a beam whose signal quality is higher than X in the target cell, until 2-step CBRA succeeds, no beam whose signal quality is higher than X exists in the target cell, or a total quantity of MSG A transmission times reaches the maximum quantity of MSG A transmission times.
(6) Further, if no beam whose signal quality is higher than X exists in the target cell, and the total quantity of times that the UE sends the MSG A does not reach the maximum quantity of MSG A transmission times, the UE may randomly select a beam to perform 2-step CBRA. If 2-step CBRA performed by the UE with the beam fails, the UE randomly selects a beam again, until 2-step CBRA succeeds or a total quantity of MSG A transmission times reaches the maximum quantity of MSG A transmission times.
(7) Further, when the total quantity of MSG A transmission times reaches the maximum quantity of MSG A transmission times, if the UE still does not successfully complete the random access procedure with the target cell, but a total quantity of preamble transmission times does not reach the maximum quantity of preamble transmission times, the UE performs 4-step CBRA.
(8) If no beam whose signal quality is higher than X exists in the target cell, the UE performs 4-step CBRA.

Case 2: If a handover message does not include a 2-step CFRA resource or a 4-step CFRA resource (for example, the handover message may include 2-step CBRA resource information, a second signal quality threshold (for example, Y), a maximum quantity of MSG A transmission times, a maximum quantity of preamble transmission times, and the like), there may be the following case.
(1) If a beam whose signal quality is higher than Y exists in the target cell, the UE performs 2-step CBRA by using the beam. If 2-step CBRA performed by the UE with the beam fails, the UE preferentially selects a beam whose signal quality is higher than Y in the target cell, until 2-step CBRA succeeds, no beam whose signal quality is higher than Y exists in the target cell, or a total quantity of MSG A transmission times reaches the maximum quantity of MSG A transmission times.
(2) Further, if no beam whose signal quality is higher than Y exists in the target cell, and the total quantity of times that the UE sends the MSG A does not reach the maximum quantity of MSG A transmission times, the UE may randomly select a beam to perform 2-step CBRA. If 2-step CBRA performed by the UE with the beam fails, the UE randomly selects a beam again, until 2-step CBRA succeeds or a total quantity of MSG A transmission times reaches the maximum quantity of MSG A transmission times.
(3) Further, when the total quantity of MSG A transmission times reaches the maximum quantity of MSG A transmission times, if the UE still does not successfully complete the random access procedure with the target cell, but a total quantity of preamble transmission times does not reach the maximum quantity of preamble transmission times, the UE performs 4-step CBRA.
(4) If no beam whose signal quality is higher than Y exists in the target cell, the UE performs 4-step CBRA.

In a handover process, after the UE completes the random access procedure with the target cell, that is, the UE is successfully handed over to the target cell, the UE may communicate with the target cell/a target base station.

Similarly, when UE in an idle state initiates RRC establishment or UE in an inactive state initiates RRC resume, for a fallback mechanism from 2-step RACH to 4-step RACH between the UE and an RRC establishment cell or an RRC resume cell, refer to the foregoing case 2. Specifically, a system message broadcast by the RRC establishment cell or the RRC resume cell may include 2-step CBRA resource information, a third signal quality threshold (for example, Z), a maximum quantity of MSG A transmission times, a maximum quantity of preamble transmission times, and the like, and there may be the following case.
(1) If a beam whose signal quality is higher than Z exists in the RRC establishment cell or the RRC resume cell, the UE performs 2-step CBRA by using the beam. If 2-step CBRA performed by the UE with the beam fails, the UE preferentially selects a beam whose signal quality is higher than Z in the RRC establishment cell or the RRC resume cell, until 2-step CBRA succeeds, no beam whose signal quality is higher than Z exists in the RRC establishment cell or the RRC resume cell, or a total quantity of MSG A transmission times reaches the maximum quantity of MSG A transmission times.
(2) Further, if no beam whose signal quality is higher than Z exists in the RRC establishment cell or the RRC resume cell, and the total quantity of times that the UE sends the MSG A does not reach the maximum quantity of MSG A transmission times, the UE may randomly select a beam to perform 2-step CBRA. If 2-step CBRA performed by the UE with the beam fails, the UE randomly selects a beam again, until 2-step CBRA succeeds or a total quantity of MSG A transmission times reaches the maximum quantity of MSG A transmission times.
(3) Further, when the total quantity of MSG A transmission times reaches the maximum quantity of MSG A transmission times, if the UE still does not successfully complete the random access procedure with the RRC connection establishment cell, but a total quantity of preamble transmission times does not reach the maximum quantity of preamble transmission times, the UE performs 4-step CBRA.
(4) If no beam whose signal quality is higher than Z exists in the RRC establishment cell or the RRC resume cell, the UE performs 4-step CBRA.

After the UE completes the random access procedure, for the UE in the idle state, after a series of procedures such as secure air interface activation and the like are completed, the UE needs to obtain a corresponding configuration for establishing a data bearer required for data transmission, to communicate with the network device; and for the UE in the inactive state, after random access succeeds, the UE can communicate with a network.

In the foregoing random access procedure, to avoid a RACH failure caused by inappropriate configuration of the network device, the terminal device records information in the RACH procedure, and generates a corresponding RACH report (also referred to as an RA report). After the terminal device accesses the network, the terminal device sends the RACH report to the network device, so that the network device identifies a problem in the RACH procedure and optimizes a RACH configuration in a timely manner, thereby improving a RACH success rate of the terminal device. For example, the network side sends, to the terminal device, an indication for requesting to report RACH. If the terminal device has a RACH report, the terminal device sends the RACH report to the network side. In addition, RACH information recorded by the terminal device can be stored for a maximum of 48 hours. If the terminal device does not send the information to the network side within 48 hours (for example, within 48 hours after the terminal device records information in the last successful RACH procedure in the RACH report), the terminal device discards the recorded RACH information. If a base station to which the terminal device reports the RACH report and a base station corresponding to the RACH procedure (that is, the RACH information recorded in the RACH report indicates a specific base station for initiating the RACH procedure) are not a same base station, the base station that receives the RACH report from the terminal device sends the RACH report to the base station corresponding to the RACH procedure in the RACH report (through a core network or through direct communication between the two base stations).

Currently, in an MR-DC scenario, an SN side may also optimize a RACH-related parameter based on information in a RACH procedure on the SN side that is recorded by a terminal device. There are the following corresponding solutions.

Solution 1: When the terminal device is in MR-DC, the terminal device records the information in the RACH procedure on the SN side (briefly referred to as an SN-side RACH report), and the terminal device first sends the SN-side RACH report to an MN (the SN-side RACH report is carried in an RRC message sent to the MN). After the MN parses the SN-side RACH report from the RRC message for the MN, the MN sends the RACH report to an SN.

Solution 2: When the terminal device is in MR-DC, the terminal device directly sends the SN-side RACH report to an SN (the SN-side RACH report is carried in an RRC message sent to the SN, and the terminal device may directly send the RRC message for the SN to the SN, or the RRC message for the SN may be encapsulated in an RRC message for an MN, the terminal device sends the RRC message for the MN to the MN, and then the MN sends the RRC message for the SN to the SN).

However, in the foregoing two solutions in the MR-DC scenario, a transmission failure is likely to occur.

An EN-DC scenario is used as an example. When a terminal device is in RRC_CONNECTED and is in EN-DC (connected to both a source master access network device SeNB1 and a source secondary access network device SgNB1), the terminal device records RACH-related information corresponding to an SN side. Then, when the terminal device returns to non-EN-DC RRC_CONNECTED (or the UE first returns to RRC_IDLE and then enters RRC_CONNECTED), a base station that directly receives an SN-side RACH report from the terminal device cannot send the RACH report to a base station corresponding to a RACH procedure in the RACH report. Specifically, there may be a control plane interface between the SgNB1 and only some eNBs, and there is no control plane interface between the SgNB1 and a core network. When the terminal device sends an SgNB1-side RACH report to a target access network device (eNB2 or gNB2), because there is no interface between the target access network device (eNB2 or gNB2) and the SgNB1, the target access network device (eNB2 or gNB2) cannot send the SgNB1-side RACH report to the SgNB1. As a result, the SgNB1-side RACH report sent by the terminal device cannot be received by the SgNB1, and RACH configuration optimization cannot be performed based on the SgNB1-side RACH report.

Therefore, in the DC scenario, after the terminal device records the RA report corresponding to the SN side, if the terminal device is disconnected from the MN and establishes a connection to another network device, how to report the RA report corresponding to the SN side is a technical problem to be resolved urgently.

To resolve the foregoing technical problem, embodiments of this application provide a communication method and a communication apparatus. After a master access network device of a terminal device changes from a source master access network device to a target access network device, the terminal device sends the first RA report to a source secondary access network device through the target access network device, so that the source secondary access network device receives the RA report and optimizes a related RA configuration based on the RAreport, to increase an RA access success rate of the terminal device for the source secondary access network device.

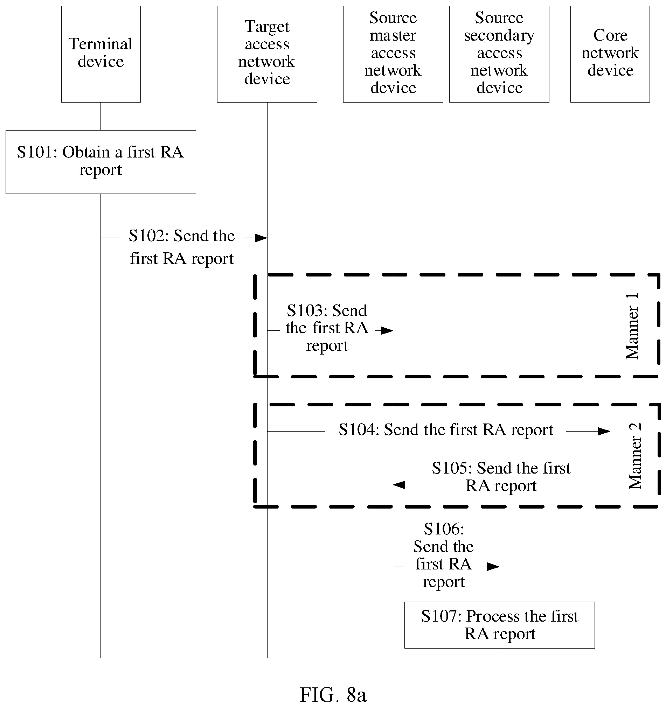

FIG. 8a is a schematic diagram of a communication method according to an embodiment of this application. The method includes the following steps.

S101: A terminal device obtains a first RA report.

In this embodiment, the terminal device obtains the first RA report in step S101, and the first RA report includes information about a random access procedure initiated by the terminal device to a source secondary access network device.

Specifically, in step S101, when the terminal device is in a dual connectivity state (for example, connected to both a source master access network device and the source secondary access network device), the terminal device records the information about the random access procedure initiated by the terminal device to the source secondary access network device, and generates the corresponding first RA report. The random access procedure initiated by the terminal device to the source secondary access network device may specifically include 2-step RACH or 4-step RACH shown in FIG. 3 to FIG. 7 or another random access procedure. For a specific implementation of the random access procedure, refer to the foregoing description. Details are not described herein again.

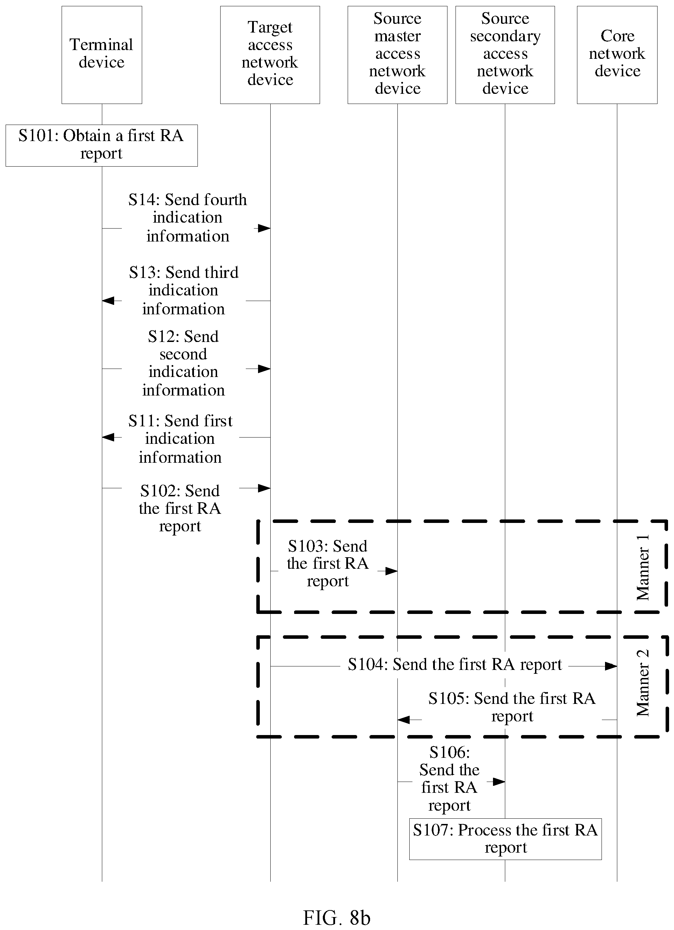

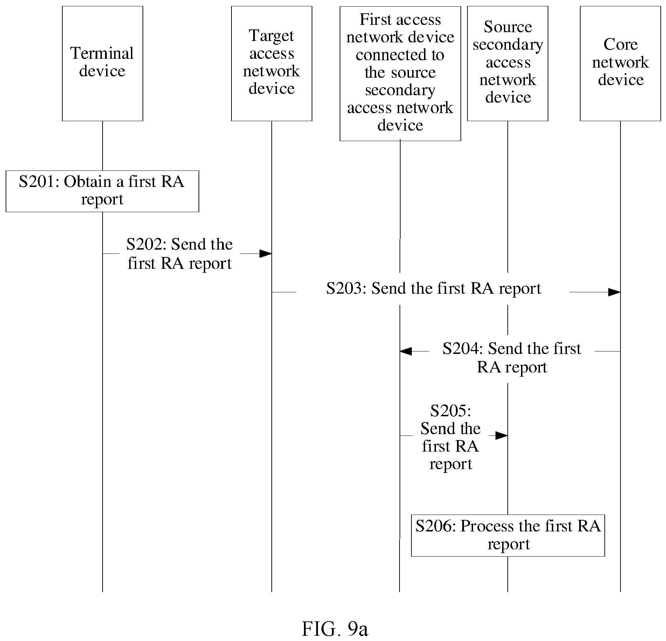

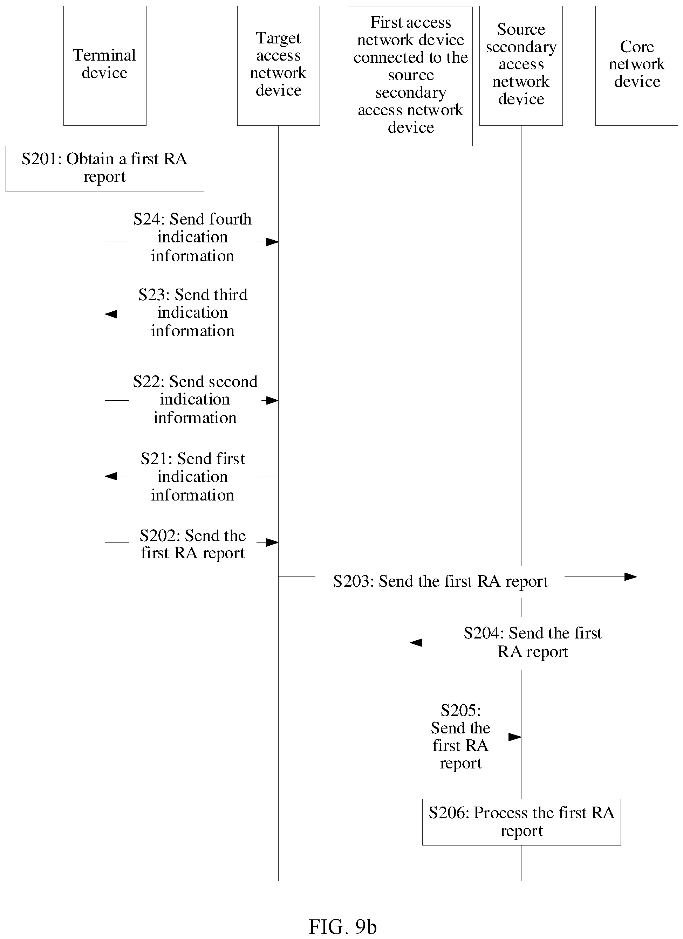

In addition, the terminal device mentioned in this embodiment and subsequent embodiments supports simultaneous access to a plurality of access network devices, that is, the plurality of access network devices simultaneously provide communication services for the terminal device. For example, the terminal supports dual-connectivity (dual-connectivity, DC). For detailed descriptions of dual-connectivity, refer to the foregoing related content. Details are not described herein again. It should be noted that, the terminal device may obtain one or more RA reports of one or more secondary access network devices as the first RA report in step S101. For example, the terminal device obtains, as the first RA report, one or more RA reports of a secondary access network device accessed last one or more times. Alternatively, the terminal device obtains, as the first RA report, one or more RA reports of one or more secondary access network devices accessed within last preset duration. Alternatively, there may be another implementation. This is not limited herein. Based on this, in this embodiment and subsequent embodiments, an information exchange process between different devices may be one or more data sending and receiving processes. For example, in FIG. 8a and FIG. 8b, in step S103, a target access network device may send the first RA report to one or more source access network devices. For another example, in step S105, a core network device may send the first RA report to one or more source master access network devices. It is clear that, other steps in FIG. 8a and FIG. 8b, FIG. 9a and FIG. 9b, or other embodiments may also be implemented in a similar manner, and details are not described herein again.

Specifically, the first RA report includes at least one of the following.

In a possible implementation, when a master access network device of the terminal device is a source master access network device, the terminal device may further be connected to a secondary access network device, for example, the source secondary access network device. The terminal device initiates a random access procedure to a PSCell of the source secondary access network device to implement uplink synchronization with the source secondary access network device, records information about the random access procedure initiated by the terminal device to the source secondary access network device, and generates a corresponding first RA report. Specifically, the first RA report includes at least one of the following:
cell information of the source secondary access network device, a PLMN identifier, a purpose of a first random access procedure, an absolute frequency of a reference signal associated with a random access resource used in the first random access procedure, a frequency domain position associated with an uplink BWP corresponding to the random access resource used in the first random access procedure, a frequency domain position bandwidth associated with the uplink BWP corresponding to the random access resource used in the first random access procedure, a frequency domain position subcarrier spacing associated with the uplink BWP corresponding to the random access resource used in the first random access procedure, a frequency domain start position (msg1-FrequencyStart, referring to an offset between a PRACH transmission occasion and PRB0 in frequency domain (for contention-based random access resources and non-contention-based random access resources, this information is recorded separately); or msgA-FrequencyStart, referring to an offset between a transmission occasion of a MSG A and PRB0 in frequency domain) corresponding to a message 1 or a MSG A in the first random access procedure, a frequency division manner (msg1-FDM, referring to a quantity of times that a PRACH transmission occasion is frequency-division multiplexed in frequency domain in one time domain; or msgA-FDM, referring to a quantity of times that a transmission occasion of a MSG A is frequency-division multiplexed in frequency domain in one time domain) (for contention-based random access resources and non-contention-based random access resources, this information is recorded separately) corresponding to the message 1 or the MSG A in the first random access procedure, a subcarrier spacing (msg1-SubcarrierSpacing or msgA-SubcarrierSpacing) (for contention-based random access resources and non-contention-based random access resources, this information is recorded separately) corresponding to the message 1 or the MSG A in the first random access procedure, information about an SSB associated with the random access resource used in the first random access procedure, and information about a CSI-RS associated with the random access resource used in the first random access procedure, where the first random access procedure is the random access procedure initiated by the terminal device to the source secondary access network device, and the cell information of the source secondary access network device is cell information of a cell corresponding to the random access procedure initiated by the terminal device to the source secondary access network device, and includes at least one of a CGI of a PSCell, a TAC of the PSCell, a PCI of the PSCell, frequency information of the PSCell, a CGI of an SCell, a TAC of the SCell, a PCI of the SCell, and frequency information of the SCell.

For example, the first RA report includes the cell information of the source secondary access network device, the purpose of the first random access procedure, and the absolute frequency of the reference signal associated with the random access resource used in the first random access procedure.

In a plurality of implementation processes of the first RA report, the purpose of the first random access procedure may be implemented by using at least one of the following.
(1) When the terminal device initiates initial access from RRC_IDLE, initiates random access from RRC_INACTIVE, or performs a system information request based on a MSG 3, a purpose of a random access procedure may be indicated as access-related.
(2) For beam failure recovery performed in a special cell (special cell, SpCell for short) (the SpCell includes a PCell and a PSCell), a purpose of a RACH procedure may be indicated as beam failure recovery.
(3) For a RACH procedure performed by the terminal device to perform reconfiguration with synchronization, a purpose of the RACH procedure may be indicated as a RACH procedure performed to perform reconfiguration with synchronization (reconfigurationwithSync).
(4) When downlink data arrives or uplink data arrives in an RRC_CONNECTED state, and a current TA timer does not run, or the terminal device receives a PDCCH order sent by a network side, a purpose of a RACH procedure may be indicated as uplink out-of-synchronization.
(5) For a RACH procedure initiated due to a scheduling request failure, a purpose of the RACH procedure may be indicated as the scheduling request failure. For a RACH procedure initiated because there is no valid PUCCH resource corresponding to a scheduling request, a purpose of the RACH procedure may be indicated as no available PUCCH resource.
(6) For a RACH procedure performed based on a msg1-based on demand system information request, a purpose of the RACH procedure may be indicated as another system information request.

In a plurality of implementation processes of the first RA report, if the used random access resource is associated with an SSB, for consecutive random access attempts associated with a same SSB, the following information is recorded and determined as the information about the SSB associated with the random access resource used in the first random access procedure, including:
(1) an index of the SSB associated with the used random access resource;
(2) a quantity of consecutive random access attempts associated with the SSB; and
(3) for each random access attempt, the following information of each random access attempt is recorded in order of occurrence time:
   (a) when the random access attempt is contention-based random access, and a random access purpose is not set to another system information request, if a contention conflict does not succeed, it is recorded that a conflict is detected; or if conflict resolution succeeds, it is recorded that no conflict is detected; and
   (b) when the random access attempt is contention-based random access, or when the random access attempt is non-contention-based random access and a random access procedure is triggered by a physical downlink control channel (physical downlink control channel, PDCCH) order (PDCCH order), if a reference signal received power (reference signal received power, RSRP) of the SSB is higher than a configured threshold, it is recorded that the RSRP of the current SSB is higher than the configured threshold; or if a reference signal received power of the SSB is not higher than a configured threshold, it is recorded that the RSRP of the current SSB is not higher than the configured threshold.

In a plurality of implementation processes of the first RA report, if the used random access resource is associated with a CSI-RS, the following information is recorded and determined as the information about the channel state information-reference signal (channel state information reference signal, CSI-RS) associated with the random access resource used in the first random access procedure, including:
(1) an index of the CSI-RS; and
(2) a quantity of consecutive random access attempts associated with the CSI-RS.

In a plurality of implementation processes of the first RA report, the terminal device further obtains second identification information, and the second identification information indicates the source secondary access network device. One master access network device may be connected to a plurality of secondary access network devices. The terminal device subsequently sends the first RA report to the source master access network device through the target access network device, and then the source master access network device sends the first RA report to the source secondary access network device. Therefore, the terminal device needs to obtain the second identification information indicating the source secondary access network device, so that the source master access network device can subsequently send the first RA report to the source secondary access network device based on the second identification information.

Optionally, in step S101, the terminal device initiates a random access procedure to a PCell of the source master access network device, to implement uplink synchronization with the source master access network device, and the terminal device may further record information about the random access procedure initiated by the terminal device to the source master access network device, and generate a corresponding second RA report. The second RA report carries cell information of a cell corresponding to the random access procedure initiated by the terminal device to the source master access network device, and includes at least one of a CGI of a PCell, a TAC of the PCell, a PCI of the PCell, frequency information of the PCell, a CGI of an SCell, a TAC of the SCell, a PCI of the SCell, and frequency information of the SCell.

In addition, in step S101, in a process in which the terminal device initiates random access to a master secondary access network device, the terminal device may additionally obtain and record first identification information, and the first identification information includes cell information of the source master access network device. That is, the terminal device obtains PCell information of the source master access network device in step S101, and the PCell information includes at least one of a CGI of a PCell, a TAC of the PCell, a physical cell identifier PCI of the PCell, and frequency information. The terminal device subsequently sends the first RA report to the source master access network device through a target access network device, and the target access network device may send the first RA report to the source secondary access network device based on the PCell information of the source master access network device.

Optionally, the first identification information may include identification information of the source master access network device.

Optionally, the first identification information may include identification information of the source master access network device and the PCell information of the source master access network device.

S 102: The terminal device sends the first RA report to the target access network device.

In this embodiment, the terminal device sends, in step S102, the first RA report obtained in step S 101 to the target access network device. Correspondingly, the target access network device receives, in step S 102, the first RA report sent by the terminal device. The first RA report may be carried in a first message sent by the terminal device to the target access network device, the first message includes the first identification information, and the first identification information indicates the source master access network device.

In a possible implementation, after a master access network device of the terminal device changes from the source master access network device to the target access network device, the terminal device performs step S 102 to send the first RA report to the target access network device. After the master access network device of the terminal device changes from the source master access network device to the target access network device, a secondary access network device may be added for the terminal device, for example, the source secondary access network device or another access network device. Alternatively, a secondary access network device may not be added for the terminal device, and only the target access network device provides a service for the terminal device. This is not limited herein.

The first message may be a UE information response (UEInformationResponse) or another message. This is not limited herein.

Specifically, the target access network device and the source master access network device are a same access network device; or the target access network device and the source master access network device are different access network devices. A process in which the master access network device of the terminal device changes from the source master access network device to the target access network device may be a process in which the terminal device is handed over between stations. In this case, the target access network device and the source master access network device may be different access network devices. Alternatively, the process may be a process in which the terminal device exits a connected state and reestablishes a connection in an idle state. In this case, the target access network device and the source master access network device may be a same access network device, or may be different access network devices. In this way, the target access network device and the source master access network device can be flexibly implemented according to different scenarios. Alternatively, the process may be that a secondary access network device change (that is, handover from the source secondary access network device to another secondary access network device) occurs when the terminal device is connected to the source master access network device. In this case, the target access network device and the source master access network device are a same access network device. Alternatively, the process may be that the source secondary access network device is released when the terminal device is connected to the source master access network device. In this case, the target access network device and the source master access network device are a same access network device.

In a possible implementation, in step S102, the first identification information that indicates the source access network device and that is carried in the first message sent by the terminal device to the target access network device may include PCell information of the source master access network device. The PCell information includes at least one of a CGI of a PCell, a TAC of the PCell, a physical cell identifier PCI of the PCell, and frequency information. When accessing the source master access network device, the terminal device accesses at least the PCell in the source master access network device. Therefore, the first identification information indicating the source master access network device may specifically include the PCell information during access of the terminal device to the source master access network device, that is, the source master access network device is indicated by using the PCell information.

Optionally, the first identification information may include identification information of the source master access network device.

Optionally, the first identification information may include identification information of the source master access network device and the PCell information of the source master access network device.

In a possible implementation, in step S102, the first identification information carried in the first message sent by the terminal device to the target access network device may be carried in the first message in a non-container form. After the terminal device sends the first information to the target access network device, the target access network device needs to determine the source master access network device based on the first identification information in the first message. In this case, the first identification information may be carried in the first message in the non-container form. In this way, the target access network device can parse and obtain, from the first message, the first identification information indicating the source master access network device.

In this application, a container may refer to a byte string or a bit string. The container may be transparently transmitted to a final receive end through an intermediate node. In other words, the intermediate node does not need to parse content in the container, and only forwards the container to the receive end. Correspondingly, if information is transmitted from the intermediate node to the receive end in a non-container form, the intermediate node may parse the information, and then send the information to the receive end in a non-container form.

In a possible implementation, in step S 102, the first message sent by the terminal device to the target access network device further includes second identification information, the second identification information indicates the source secondary access network device, and the second identification information is carried in the first message in a non-container form. One master access network device may be connected to a plurality of secondary access network devices. The terminal device subsequently sends the first RA report to the source master access network device through the target access network device, and then the source master access network device sends the first RA report to the source secondary access network device. Therefore, the terminal device needs to obtain the second identification information indicating the source secondary access network device, so that the source master access network device can subsequently send the first RA report to the source secondary access network device based on the second identification information.

In a possible implementation, the first message includes the first RA report, possible first identification information, and possible second identification information. In an implementation process of step S102, all information carried in the first message sent by the terminal device to the target access network device may be sent in a container form, or some carried information (for example, the first RA report, or a part of the first RA report other than the cell information of the source secondary access network device) is sent in a container form, and the other carried information (for example, the first identification information, the second identification information, or the cell information of the source secondary access network device in the first RA report) is sent in a non-container form. This is not limited herein.

Specifically, the second identification information includes PSCell information of the source secondary access network device, and the PSCell information includes at least one of a CGI of a PSCell, a TAC of the PSCell, a PCI of the PSCell, and frequency information; and/or the second identification information includes PSCell information of the source secondary access network device, and the SCell information includes at least one of a CGI of an SCell, a TAC of the SCell, a PCI of the SCell, and frequency information. When accessing the source secondary access network device, the terminal device may access the PSCell and/or the SCell in the source master access network device. Therefore, the second identification information indicating the source secondary access network device may specifically include the PSCell information and/or the SCell information during access of the terminal device to the source secondary access network device, that is, the source secondary access network device is indicated by using the PCell information and/or the SCell information.

Optionally, the second identification information may include identification information of the source secondary access network device.

Optionally, the second identification information may alternatively include identification information of the source secondary access network device, the PSCell information of the source secondary access network device, and the SCell information of the source secondary access network device.

In the embodiment shown in FIG. 8a, before the terminal device sends the first message to the target access network device in step S102, the terminal device may further trigger execution of step S102 based on an indication of the target access network device. The following provides description with reference to an example shown in FIG. 8b. It should be noted that, an implementation process of step S101 to step S107 in FIG. 8b is similar to an implementation process of step S101 to step S107 in FIG. 8a, and a difference lies in that step S11 and possible step S12, step S13, and step S14 are added in FIG. 8b.

As shown in FIG. 8b, before step S102, the method further includes the following steps.

S11: The terminal device receives first indication information from the target access network device, where the first indication information indicates to report information about a random access procedure on a secondary access network device side. For example, a terminal device information request (UEInformationRequest) message received from the target access network device carries the first indication information.

In step S11, the terminal device may trigger, based on the first indication information that is sent by the target access network device and that indicates to report the information about the random access procedure on the secondary access network device side, sending of the first message to the target access network device, so that the terminal device knows a sending occasion for sending the first message, thereby improving communication efficiency.

Optionally, the first indication information indicates the terminal device to report information about a random access procedure of the terminal device on the corresponding secondary access network device side. The secondary access network device may be a secondary access network device historically accessed by the terminal device, for example, a secondary access network device that is last accessed one or more times, a secondary access network device that is accessed within last preset duration, or the like. This is not limited herein.

Optionally, before the terminal device receives the first indication information from the target access network device, the method further includes the following step.

S12: The terminal device sends second indication information to the target access network device, where the second indication information indicates that the terminal device has the information about the random access procedure on the secondary access network device side. For example, the second indication information is carried in an RRC establishment complete message, an RRC reconfiguration complete message, or an RRC reestablishment complete message sent by the terminal device to the target base station.

The target access network device may trigger, based on the second indication information that is sent by the terminal device and that indicates that the terminal device has the information about the random access procedure on the secondary access network device side, the target access network device to send the first indication information. In this way, the target access network device may trigger an RA report reporting procedure for only the terminal device that has the information about the random access procedure on the secondary access network device side, to avoid unnecessary signaling consumption.

In a possible implementation, as described in step S101, if the terminal device further obtains, in step S101, the second RA report that includes the information about the random access procedure initiated by the terminal device to the source master access network device, the terminal device may further send the second RA report to the target access network device. In this case, the second RA report and the first RA report are carried in a same message, that is, both are carried in the first message in step S 102.

Optionally, the second RA report and the first RA report may be carried in different messages.

Specifically, when the master access network device of the terminal device is the source master access network device, the terminal device may further obtain the information about the random access procedure initiated by the terminal device to the source master access network device to obtain the second RA report, and send the second RA report to the source master access network device through the target access network device, so that the source master access network device subsequently receives the second RA report and optimizes a related RA configuration based on the second RA report. This improves an RA access success rate of the terminal device for the source master access network device.

Similarly, before the terminal device sends the second RA report to the target access network device, the method further includes the following step.

S13: The terminal device receives third indication information from the target access network device, where the third indication information indicates to report information about a random access procedure on the master access network device side.

In step S13, the terminal device may trigger, based on the third indication information that is sent by the target access network device and that indicates to report the information about the random access procedure on the master access network device side, sending of the second RA report to the target access network device, so that the terminal device knows a sending occasion for sending the second RA report, thereby improving communication efficiency.

Optionally, the third indication information in step S13 and the first indication information in step S11 are carried in a same message sent by the target access network device to the terminal device, or the third indication information and the first indication information are carried in different messages sent by the target access network device to the terminal device.

Optionally, the third indication information indicates the terminal device to report information about a random access procedure of the terminal device on the master access network device side. The master access network device may be a master access network device historically accessed by the terminal device, for example, a master access network device that is last accessed one or more times, a master access network device that is accessed within last preset duration, or the like. This is not limited herein.

Further, before the terminal device receives the third indication information from the target access network device, the method further includes the following step.

S14: The terminal device sends fourth indication information to the target access network device, where the fourth indication information indicates that the terminal device has the information about the random access procedure on the master access network device side.

In step S14, the target access network device may trigger, based on the fourth indication information that is sent by the terminal device and that indicates that the terminal device has the information about the random access procedure on the master access network device side, the target access network device to send the third indication information. In this way, the target access network device may trigger an RA report reporting procedure for only the terminal device that has the information about the random access procedure on the master access network device side, to avoid unnecessary signaling consumption.

Optionally, in step S14 and step S12, the fourth indication information and the second indication information are carried in a same message sent by the target access network device to the terminal device, or the fourth indication information and the second indication information are carried in different messages sent by the target access network device to the terminal device.

Optionally, in step S11 to step S14, the third indication information and the first indication information may be same indication information, and indicate the terminal device to report information about a random access procedure corresponding to the terminal device (including information about a random access procedure on a master access network device side and/or a secondary access network device side). The fourth indication information and the second indication information may be same indication information, and indicate that the terminal device has information about a random access procedure (including information about a random access procedure on a master access network device side and/or a secondary access network device side).

In this embodiment of this application, an objective of sending, by the terminal device, the first RA report to the target access network device in step S102 is to send the first RA report to the source secondary access network device through the target access network device. Considering that there may be no communication connection between the target access network device and the source secondary access network device, the target access network device may send the first RA report to the source master access network device in at least one of manner 1 and manner 2 shown in FIG. 8a and FIG. 8b. Subsequently, the first RA report is sent to the source secondary access network device through the source master access network device. For example, when there is a control plane interface (such as an X2 or Xn control plane interface) between the target access network device and the source master access network device, manner 1 or manner 2 may be used for implementation. For another example, when there is no control plane interface (for example, an X2 or an Xn control plane interface) between the target access network device and the source master access network device, only manner 2 can be used for implementation. The following describes the two implementations in detail.

Manner 1: Step S103 is used for implementation.

S103: The target access network device sends the first RA report to the source master access network device.

In this embodiment, the target access network device sends the first RA report to the source master access network device in step S103. Correspondingly, the source master access network device receives, in step S103, the first RA report from the target access network device.

In a possible implementation, the first RA report is carried in a message sent by the target access network device to the source master access network device, for example, a second message. The second message may be an access and mobility indication (access and mobility indication) message. Specifically, in a process in which the target access network device sends the first RA report to the source secondary access network device through the source master access network device, the target access network device may determine the source master access network device by using the first identification information, and send, to the source master access network device, the second message that carries the first RA report.

In a possible implementation, that the target access network device sends the first RA report to the source master access network device in step S103 includes: The target access network device sends, to the source master access network device, the first RA report carried in a container form. Because a communication standard of the target access network device and a communication standard of the source secondary access network device may be the same or different, the first RA report may be carried in the container form, to ensure that the source secondary access network device can parse and obtain the first RA report, and the source master access network device does not need to parse the first RA report.

In a possible implementation, that the target access network device sends the first RA report to the source secondary access network device through the source master access network device in step S103 includes: The target access network device sends, to the source secondary access network device through the source master access network device in a non-container form, the cell information of the source secondary access network device in the first RA report, and send other information in the first RA report in a container form. Because a communication standard of the target access network device and a communication standard of the source secondary access network device may be the same or different, the other information in the first RA report may be carried in the container form, to ensure that the source secondary access network device can parse and obtain the first RA report. The source master access network device does not need to parse the other information in the first RA report. The source master access network device needs to learn, based on the cell information of the source secondary access network device in the first RA report, which device is the source secondary access network device, that is, which secondary access network device corresponds to the first RA report.

It should be noted that, in step S103, for a sending manner of the second message (a container form or a non-container form), refer to the sending manner of the first message in step S 102. Details are not described herein again.

In a possible implementation, in addition to sending, by the target access network device, the first RA report to the source master access network device in step S103, the method further includes: The target access network device sends fifth indication information to the source master access network device, where the fifth indication information indicates that the first RA report includes the information about the random access procedure initiated by the terminal device to the source secondary access network device. Specifically, the target access network device may further send the fifth indication information to the source master access network device, where the fifth indication information indicates that the first RA report includes the information about the random access procedure initiated by the terminal device to the source secondary access network device, so that the source master access network device may determine that the first RA report is associated with the source secondary access network device. The fifth indication information and the first RA report may be carried in a same message, for example, the second message, or the fifth indication information and the first RA report may be carried in different messages. This is not limited herein.

In a possible implementation, as shown in step S102, the first message received by the target access network device in step S 102 may further include the second identification information indicating the source secondary access network device, and the second identification information is carried in the first message in a non-container form. In this case, in addition to sending, by the target access network device, the first RA report to the source master access network device in step S103, the method further includes: The target access network device sends, to the source master access network device, the second identification information carried in the non-container form. The second identification information and the first RA report may be carried in a same message, for example, the second message, or the second identification information and the first RA report may be carried in different messages. This is not limited herein.

Specifically, because an objective of sending the first message by the terminal device is to send the first RA report to the source secondary access network device through the target access network device, the terminal device may further use the first message to carry the second identification information indicating the source secondary access network device. In this case, the target access network device may send the second identification information carried in the non-container form to the source master access network device, for example, use the second message to carry the second identification information and send the second message to the source master access network device, so that the source master access network device can determine that the first RA report is associated with the source secondary access network device indicated by the second identifier information. Therefore, the source master access network device may determine, based on the second identification information, a specific secondary access network device to which the first RA report is to be sent.

Manner 2: Step S104 and step S105 are used for implementation.

S104: The target access network device sends the first RA report to the core network device.

In this embodiment, the target access network device sends the first RA report to the core network device in step S 104. Correspondingly, the core network device receives the first RA report from the target access network device in step S 104.

A core network device corresponding to the target access network device and a core network device corresponding to the source master access network device may be a same core network device. In this case, only one sending process needs to be performed in step S 104, that is, the target access network device sends the first RA report to the core network device corresponding to the target access network device. A core network device corresponding to the target access network device and a core network device corresponding to the source master access network device may not be a same core network device. In this case, a plurality of sending processes may need to be performed in step S104. That is, the target access network device sends the first RA report to the core network device corresponding to the target access network device. Then, after determining, through searching, the core network device corresponding to the source master access network device, the core network device corresponding to the target access network device sends the first RA report to the core network device corresponding to the source master access network device.

In a possible implementation, the first RA report is carried in a third message sent by the target access network device to the core network device. For example, the third message may be an uplink RAN configuration transfer (uplink RAN configuration transfer) message. Specifically, in a process in which the target access network device sends the first RA report to the source secondary access network device through the source master access network device, the target access network device may implement the process through the core network device. To be specific, the third message that carries the first RA report is sent through a communication connection between the target access network device and the core network device, and the first RA report is sent to the source master access network device through the core network device, so that the source master access network device receives the first RA report.

Specifically, the third message further includes target identification information, the target identification information includes at least one of the first identification information and third identification information, and the third identification information is an identifier of the source master access network device that is determined based on the first identification information. The third message that is sent by the target access network device to the core network device and that carries the first RA report may further include the target identification information, where the target identification information may be the first identification information sent by the terminal device, or the identifier of the source master access network device that is determined by the target access network device based on the first identification information, so that the core network device may determine the source master access network device based on the target identification information, and send the first RA report to the source master access network device. In this way, the source master access network device receives the first RA report. The target identification information may be carried in the third message in a non-container form.

In addition, similar to the implementation process of step S 103, as shown in step S 102, the first message received by the target access network device in step S 102 may further include the second identification information indicating the source secondary access network device, and the second identification information is carried in the first message in a non-container form. In this case, in the third message sent by the target access network device to the core network device in step S104, the target identification information may further include the second identification information, where the second identification information is carried in the third message in a non-container form. Specifically, because an objective of sending the first message by the terminal device is to send the first RA report to the source secondary access network device through the target access network device, the terminal device may further use the first message to carry the second identification information indicating the source secondary access network device. In this case, the target access network device may send, in step S104, the second identification information carried in the non-container form to the core network device, for example, use the third message to carry the second identification information and send the third message to the core network device, so that the core network device can determine that the first RA report is associated with the source secondary access network device indicated by the second identification information, or so that after the core network sends the first RA report to the source master access network device, the source master access network device can determine, based on the second identification information, a specific secondary access network device to which the first RA report is to be sent.

It should be noted that, in step S104, for a sending manner of the third message (a container form or a non-container form), refer to the sending manner of the first message in step S 102. Details are not described herein again.

In a possible implementation, that the target access network device sends the first RA report to the source secondary access network device through the source master access network device in step S104 includes: The target access network device sends, to the source secondary access network device through the core network device, the first RA report carried in a container form. Because a communication standard of the target access network device and a communication standard of the source secondary access network device may be the same or different, the first RA report may be carried in the container form, to ensure that the source secondary access network device can parse and obtain the first RA report.

In a possible implementation, that the target access network device sends the first RA report to the source secondary access network device through the source master access network device in step S104 includes: The target access network device sends, to the source secondary access network device through the core network device, the cell information of the source secondary access network device that is carried in the non-container form in the first RA report, and send other information in the first RA report in a container form. Because a communication standard of the target access network device and a communication standard of the source secondary access network device may be the same or different, the other information in the first RA report may be carried in the container form, to ensure that the source secondary access network device can parse and obtain the first RA report. The source master access network device does not need to parse the other information in the first RA report. The source master access network device needs to learn, based on the cell information of the source secondary access network device in the first RA report, which device is the source secondary access network device, that is, which secondary access network device corresponds to the first RA report.

In a possible implementation, in addition to sending, by the target access network device, the first RA report to the core network device in step S104, the method further includes: The target access network device sends fifth indication information to the core network device, where the fifth indication information indicates that the first RA report includes the information about the random access procedure initiated by the terminal device to the source secondary access network device. Specifically, the target access network device may further send the fifth indication information to the source master access network device through the core network device, where the fifth indication information indicates that the first RA report includes the information about the random access procedure initiated by the terminal device to the source secondary access network device, so that the core network device may determine that the first RA report is associated with the source secondary access network device. Similarly, the fifth indication information and the first RA report may be carried in a same message, for example, the third message. Alternatively, the fifth indication information and the first RA report may be carried in different messages. This is not limited herein.

S105: The core network device sends the first RA report to the source master access network device.

In this embodiment, after step S104, the core network device sends the first RA report to the source master access network device in step S105. Correspondingly, the source master access network device receives the first RA report from the core network device in step S105.

In a possible implementation, the first RA report is carried in a container form in a fourth message sent by the core network device to the source master access network device. Because a communication standard of the core network device and a communication standard of the source secondary access network device may be the same or different, the first RA report may be carried in the fourth message in the container form, to ensure that the source secondary access network device can subsequently parse and obtain the first RA report, and another device does not need to parse content in a container. For example, the fourth message may be a downlink RAN configuration transfer (downlink RAN configuration transfer) message or another message. This is not limited herein.

In a possible implementation, the cell information of the source secondary access network device in the first RA report is carried in a non-container form in the fourth message sent by the core network device to the source master access network device. Other information in the first RA report is carried in a container form in the fourth message sent by the core network device to the source master access network device. Because a communication standard of the core network device and a communication standard of the source secondary access network device may be the same or different, the other information in the first RA report may be carried in the fourth message in the container form, to ensure that the source secondary access network device can subsequently parse and obtain the first RAreport, and another device does not need to parse content in the other information in the first RA report.

In addition, the fourth message may further include the second identification information, and the second identification information may be carried in the fourth message in a non-container form.

It should be noted that, in step S105, for a sending manner of the fourth message (a container form or a non-container form), refer to the sending manner of the first message in step S 102. Details are not described herein again.

S 106: The source master access network device sends the first RA report to the source secondary access network device.

In this embodiment, the source master access network device sends the first RA report to the source secondary access network device in step S106. Correspondingly, the source secondary access network device receives the first RA report from the source master access network device in step S 106.

In a possible implementation, in step S 106, the first RA report is carried in a container form in a fifth message sent by the source master access network device to the source secondary access network device. Because a communication standard of the source master access network device and a communication standard of the source secondary access network device may be the same or different, the first RA report may be carried in the fifth message in the container form, to ensure that the source secondary access network device can parse and obtain the first RA report.

In a possible implementation, in step S 106, the cell information of the source secondary access network device in the first RA report is carried in a non-container form in the fifth message sent by the source master access network device to the source secondary access network device. Other information in the first RA report is carried in a container form in the fifth message sent by the source master access network device to the source secondary access network device.

It should be noted that, in step S106, for a sending manner of the fifth message (a container form or a non-container form), refer to the sending manner of the first message in step S 102. Details are not described herein again.

S 107: The source secondary access network device processes the first RA report.

In this embodiment, the source secondary access network device performs processing based on the first RA report received in step S106, that is, the source secondary access network device identifies a problem in a RACH procedure based on the first RA report in step S 107, and optimizes a RACH configuration in a timely manner. This improves a RACH success rate of the terminal device.

In a possible implementation, when the source secondary access network device uses a CU/DU architecture, after a CU-CP of the source secondary access network device receives the first RA report in step S106, the CU-CP of the source secondary access network device may further send the first RA report to a DU of the source secondary access network device in step S107, to implement RACH configuration optimization in the DU.

In this embodiment, after the master access network device of the terminal device changes from the source master access network device to the target access network device, the terminal device sends, to the target access network device, the first message that includes the first RA report and the first identification information indicating the source master access network device, so that the target access network device can send the first RA report to the source secondary access network device through the source master access network device based on the first identification information, and subsequently the source secondary access network device receives the RA report and optimizes a related RA configuration based on the RA report. This improves an RA access success rate of the terminal device for the source secondary access network device.

As described above, in the scenario shown in FIG. 8a and FIG. 8b, the terminal device sends, to the target access network device in step S102, the first RA report and the first identification information indicating the source master access network device. In this way, the target access network device may determine, based on the first identification information (or through the core network device), which access network device is specifically the source master access network device, and send the first RA report to the source master access network device by using the foregoing manner 1 and manner 2. Finally, the source master access network device sends the first RA report to the source secondary access network device, to optimize a related RA configuration. It is clear that, the scenario shown in FIG. 8a and FIG. 8b is on a premise that the terminal device has stored (or recorded) the first identification information indicating the source master access network device.

In another implementation of this application, when the terminal device does not store (or does not record) the first identification information indicating the source master access network device, the terminal device may specifically send the first RA report to the source secondary access network device in another manner. The following provides detailed descriptions by using an example shown in FIG. 9a.

FIG. 9a is a schematic diagram of a communication method according to an embodiment of this application. The method includes the following steps.

S201: A terminal device obtains a first RA report.

In this embodiment, the terminal device obtains the first RA report in step S201, and the first RA report includes information about a random access procedure initiated by the terminal device to a source secondary access network device.

Specifically, an implementation process of step S201 is similar to an implementation process of step S101, and details are not described herein again.

It should be noted that, in step S201, the terminal device may not need to additionally record PCell information of a source master access network device, but may additionally record and obtain cell information of the source secondary access network device.

S202: The terminal device sends the first RA report to a target access network device.

In this embodiment, the terminal device sends, in step S202, the first RA report obtained in step S201 to the target access network device. Correspondingly, the target access network device receives, in step S202, the first RA report sent by the terminal device. The first RA report may be carried in a first message sent by the terminal device to the target access network device, and the first message includes identification information indicating the source secondary access network device. A meaning of the identification information is the same as that of the second identification information in the embodiment shown in FIG. 8a and FIG. 8b. To simplify description, in this embodiment, "second identification information" is also used to represent the identification information that is in the first message and that indicates the source secondary access network device.

Specifically, an implementation process of step S202 is similar to an implementation process of step S102, and details are not described herein again.

It should be noted that, in step S202, all of the first RA report may be sent in a non-container form. Alternatively, a part (for example, a part of the first RA report other than the cell information of the source secondary access network device) is sent in a container form, and the other part (for example, the cell information of the source secondary access network device in the first RA report) is sent in a non-container form.

It should be noted that, in step S202, the first message includes the first RA report and the second identification information. In the implementation process of step S102, all information carried in the first message sent by the terminal device to the target access network device may be sent in a non-container form. Alternatively, some carried information (for example, the first RA report) is sent in a container form, and the other carried information (for example, the second identification information) is sent in a non-container form. This is not limited herein.

In a possible implementation, in step S202, the terminal device may trigger execution of step S 102 based on indication information of the target access network device. For a specific implementation process, refer to FIG. 9b. It should be noted that, an implementation process of step S201 to step S207 in FIG. 9b is similar to an implementation process of step S201 to step S207 in FIG. 9a, and a difference lies in that step S21 and possible step S22, step S23, and step S24 are added in FIG. 9b.

Specifically, for an implementation process of step S21 to step S24 in FIG. 9b, refer to the implementation process of step S11 to step S14 in FIG. 8b. Details are not described herein again.

S203: The target access network device sends the first RA report to a core network device.

Optionally, in this embodiment, the target access network device sends the first RA report to the core network device in step S203. Correspondingly, the core network device receives the first RA report from the target access network device in step S203. A sending form of the first RA report is the same as that described in step 202.

Optionally, in this embodiment, the target access network device sends the first RA report and the second identification information to the core network device in step S203. Correspondingly, the core network device receives the first RA report and the second identification information from the target access network device in step S203. Sending forms of the first RA report and the second identification information are the same as those described in step 202.

Specifically, an implementation process of step S203 is similar to an implementation process of step S104, and details are not described herein again.

S204: The core network device sends the first RA report to a first access network device connected to the source secondary access network device.

Optionally, in this embodiment, the core network device sends, in step S204, the first RA report to the first access network device connected to the source secondary access network device. Correspondingly, the first access network device connected to the source secondary access network device receives the first RA report from the core network device in step S204. A sending form of the first RA report is the same as that described in step 202.

Optionally, in this embodiment, the core network device sends, in step S204, the first RA report and the second identification information to the first access network device connected to the source secondary access network device. Correspondingly, the first access network device connected to the source secondary access network device receives the first RA report and the second identification information from the core network device in step S204. Sending forms of the first RA report and the second identification information are the same as those described in step 202.

Specifically, a difference between step S204 and step S105 lies in that in step S105, the core network device sends the first RA report to the source master access network device based on the target identification information used to determine the source master access network device; but in step S204, the core network device sends, based on the second identification information used to determine the source secondary access network device or the cell information of the source secondary access network device in the first RA report, the first RA report to the first access network device connected to the source secondary access network device.

It is clear that, the first access network device connected to the source secondary access network device may be a source master access network device of the terminal device, or may not be a source master access network device of the terminal device. The core network device may determine the first access network device in a plurality of different manners based on the second identification information obtained in step S203 or the cell information of the source secondary access network device in the first RA report, and send the first RA report to the first access network device in step S204.

For example, before step S204, the core network device receives messages #1 sent by a plurality of master access network devices, where the messages #1 carry a list of secondary access network devices connected to (or having control plane interfaces with) the master access network devices. The list carries an identifier of a secondary access network device, a TAC supported by the secondary access network device, a broadcast PLMN identifier, and the like. Optionally, the list may further carry related information (that is, a CGI, a PCI, and frequency information) of each cell of the secondary base station. A core network stores the list. In this case, in step S204, the core network determines, based on the second identification information reported by the terminal device by using step S202 and step S203 or the cell information of the source secondary access network device in the first RA report and the list stored by the core network, a specific master access network device connected to the source secondary access network device corresponding to the first RA report (for example, if the core network stores related information of each cell of a source secondary access network device, the core network may determine, based on related information of each cell of a source secondary access network device corresponding to each master access network device, a master access network device corresponding to the SN access network device corresponding to the first RA report; or if the core network does not store related information of each cell of a source secondary access network device, the core network determines, based on a CGI in PSCell/SCell related information reported by the terminal device by using step S202 and step S203, an identifier of a secondary access network device corresponding to a PSCell/SCell, and then may determine, based on an identifier of a secondary access network device corresponding to each master access network device, a master access network device corresponding to the source secondary access network device corresponding to the first RA report). If the secondary access network device is connected to a plurality of master access network devices, the core network may randomly select a master access network device as the first access network device, or select a master access network device with light load, or select a master access network device connected to a smallest or largest quantity of secondary access network devices, or select a master access network device with a stronger processing capability or more transmission bandwidth.

For another example, the core network device sends, to a plurality of master access network devices, an indication message that carries the second identification information or the cell information of the source secondary access network device in the first RA report, so that the first access network device connected to the source secondary access network device feeds back a response message to the core network device. In this way, the core network device determines the first access network device, and sends the first RA report to the first access network device in step S204.

S205: The first access network device connected to the source secondary access network device sends the first RA report to the source secondary access network device.

In this embodiment, the first access network device connected to the source secondary access network device sends the first RA report to the source secondary access network device in step S205. Correspondingly, the source secondary access network device receives, in step S205, the first RA report from the first access network device connected to the source secondary access network device.

Specifically, an implementation process in which the first access network device sends the first RA report to the source secondary access network device in step S205 is similar to an implementation process in which the source master access network device sends the first RA report to the source secondary access network device in step S106, and details are not described herein again. It should be noted that, in step 205, for a sending manner of the first RA report (a container form or a non-container form), refer to the sending manner in step 202. Details are not described herein again.

S206: The source secondary access network device processes the first RA report.

In this embodiment, the source secondary access network device performs processing based on the first RA report received in step S205, that is, the source secondary access network device identifies a problem in a RACH procedure based on the first RA report in step S206, and optimizes a RACH configuration in a timely manner. This improves a RACH success rate of the terminal device.

Specifically, an implementation process of step S206 is similar to an implementation process of step S107, and details are not described herein again.

Based on the foregoing technical solution, because a communication standard of the target access network device and a communication standard of the source secondary access network device may be the same or different, the first RA report may be carried in the first message in the container form, to ensure that the source secondary access network device can subsequently parse and obtain the first RA report, and another device does not need to parse the first RA report. In addition, the second identification information may be carried in the first message in the non-container form, so that the target access network device can parse and obtain, from the first message, the second identification information used to determine the source secondary access network device. Alternatively, the cell information of the source secondary access network device in the first RA report is carried in the first message in a non-container form, and other information in the first RA report is carried in the first message in a container form, so that a device other than the source secondary access network device does not need to parse the other information in the first RA report. Subsequently, the source secondary access network device receives the RA report, and optimizes a related RA configuration based on the RA report. This improves an RA access success rate of the terminal device for the source secondary access network device.

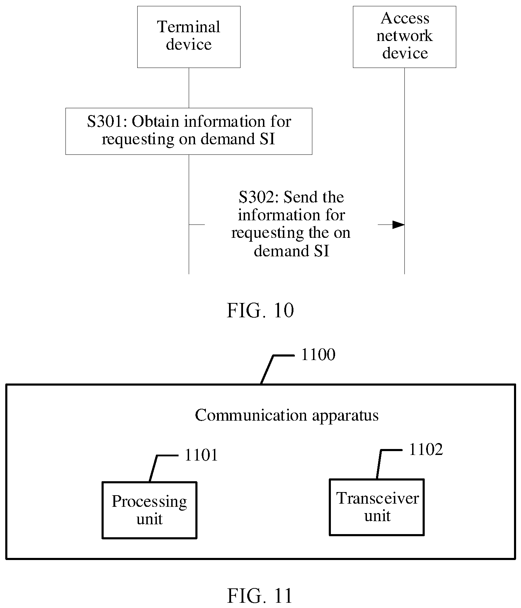

FIG. 10 is a schematic diagram of a communication method according to an embodiment of this application. The method includes the following steps.

S301: A terminal device obtains information for requesting on demand system information (on demand system information, on demand SI).

In this embodiment, the terminal device initiates a request for system information, and the terminal device obtains or records related information in a process of requesting the system information, that is, the information for requesting the on demand system information. When detecting that the system information fails to be requested, the terminal device records failure information of requesting the system information. When the terminal device detects a correct response of requesting the system information, the terminal device records success information of requesting the system information.

Specifically, when a broadcast message (for example, a SIB1) in a cell indicates that system information is not broadcast (that is, the system information is on demand SI), and the terminal device needs to request the system information, the terminal device performs the following process in step S301.

If the system information is on demand SI based on a msg 1 (the system information is not broadcast and a RACH related resource is configured for the system information), an RRC layer of the terminal device triggers a lower layer (for example, a MAC layer) of RRC to initiate a random access procedure by using the RACH resource corresponding to the system information. If the RRC layer of the terminal device does not obtain, from a bottom layer, a correct response of requesting the system information (after the terminal device sends a preamble, if the terminal device receives an RAR within an RAR window, and the RAR includes a preamble identifier sent for requesting the system information, it is considered that the RAR is successfully received; otherwise, it is considered that the random access procedure is not completed successfully and that the correct response of requesting the system information is not received; if the RAR is successfully received, the RAR includes one MAC sub-PDU (MAC sub PDU), and the MAC sub-PDU includes only the preamble identifier sent for requesting the system information, it is considered that the random access procedure is successfully completed, and it is considered that the correct response of requesting the system information is received), the terminal device considers that a failure of requesting the system information is detected.

If the system information is on demand SI based on a msg 3, the terminal device sends a message for requesting the system information, where the message carries indication information, indicating which system information is requested. Generally, the terminal device performs a RACH procedure. For example, using 4-step RACH as an example, the msg 3 in 4-step RACH described above is the message for requesting the system information herein. After the terminal device considers that conflict resolution succeeds in the RACH procedure, the terminal device considers that the correct response of requesting the system information is received. If the terminal device does not consider that conflict resolution succeeds in the RACH procedure, the terminal device considers that no correct response of requesting the system information is received. In this case, it is considered that the terminal device detects a failure of requesting the system information.

When the terminal device receives the correct response of requesting the system information or does not receive the correct response of requesting the system information, the terminal device may record at least one of the following related information in a process of requesting the system information, to obtain the information for requesting the on demand SI:
(1) a type of the requested system information (for example, SIB 1, SIB2, SIB3, or SIB4);
(2) whether the terminal device receives the correct response of requesting the system information;
(3) current location information of the terminal device (related information, such as a CGI, a PCI, and frequency information, of a current cell);
(4) whether the requested system information is area-specific system information (the area-specific system information means that system information in areas is the same; non-area-specific system information means that system information is specific to only the current cell; a base station indicates, in a broadcast message (for example, SIB 1), whether each piece of system information is area-specific system information or cell-specific system information), where an objective is to enable a network side to learn of a frequency used for the system information, to determine whether the system information is suitable to be configured as area-specific system information; and
(5) whether the terminal device attempts to receive the requested system information.

For example, when the terminal device initiates a request for on demand SI based on a msg 1 or a msg 3, before receiving an RAR or contention resolution information, the terminal device knows a receive window corresponding to the system information (that is, the terminal device knows specific moments at which the system information can be received). In this case, the terminal device may attempt to receive the system information. Alternatively, after the terminal device detects a failure of requesting the system information, before the terminal device initiates a request for the on demand system information next time (that is, initiates a request for the on demand system information based on a msg 1 or a msg 3), the terminal device may attempt to receive the system information based on a receive window corresponding to the system information. In the foregoing two cases, the terminal device may record whether the terminal device attempts to receive the requested system information. Further, the terminal device may record whether the requested system information is received.

S302: The terminal device sends the information for requesting the on demand SI to an access network device.

Optionally, the access network device sends indication information #1 to the terminal device, to indicate the terminal device to send the information for requesting the on demand SI. Then, the terminal device sends, to the access network device, the information obtained by the terminal device for the on demand SI. Further, optionally, before the access network device sends the indication information #1 to the terminal device, the terminal device may first send indication information #2 to the access network device, to indicate that the terminal device has the information for the on demand SI. After receiving the indication information #2, the access network device sends the indication information #1 to the terminal device.

After step S302, the access network device may update a configuration based on the information for requesting the on demand SI. A process of updating the configuration is optional.

In this embodiment, in a process in which the terminal device requests the on demand SI from the access network device, the terminal device may record the information for the on demand SI and report the information to the access network device, so that the access network device optimizes related configuration information of the on demand SI based on the information for requesting the on demand SI, to improve communication efficiency.

The foregoing describes embodiments of this application from a perspective of a method, and the following describes a communication apparatus in embodiments of this application from a perspective of specific apparatus implementation.

As shown in FIG. 11, an embodiment of this application provides a communication apparatus. The communication apparatus 1100 can implement a function of the communication apparatus in the foregoing method embodiments, and therefore can implement the beneficial effects of the foregoing method embodiments.

The communication apparatus includes a processing unit 1101 and a transceiver unit 1102.

In an implementation example of the communication apparatus 1100, for example, when the communication apparatus 1100 is the terminal device in the foregoing embodiments, or a component (for example, a processor, a chip, a chip system, or the like) of the terminal device, an implementation process of the communication apparatus 1100 is as follows.

The processing unit 1101 is configured to obtain a first random access report RAreport, where the first RA report includes information about a random access procedure initiated by the terminal device to a source secondary access network device.

The transceiver unit 1102 is configured to: after a master access network device of the terminal device changes from a source master access network device to a target access network device, send a first message to the target access network device, where the first message includes the first RA report and first identification information, and the first identification information indicates the source master access network device.

In a possible implementation, the first identification information includes PCell information of the source master access network device, and the PCell information includes at least one of a CGI of a PCell, a TAC of the PCell, a physical cell identifier PCI of the PCell, and frequency information.

In a possible implementation, the first identification information is carried in the first message in a non-container form.

In a possible implementation, the first message further includes second identification information, the second identification information indicates the source secondary access network device, and the second identification information is carried in the first message in a non-container form.

In a possible implementation, the second identification information includes PSCell information of the source secondary access network device, and the PSCell information includes at least one of a CGI of a PSCell, a TAC of the PSCell, a PCI of the PSCell, and frequency information; and/or
the second identification information includes PSCell information of the source secondary access network device, and the SCell information includes at least one of a CGI of an SCell, a TAC of the SCell, a PCI of the SCell, and frequency information.

In a possible implementation, the transceiver unit 1102 is further configured to:
receive first indication information from the target access network device, where the first indication information indicates to report information about a random access procedure on a secondary access network device side.

In a possible implementation, the transceiver unit 1102 is further configured to:
send second indication information to the target access network device, where the second indication information indicates that the terminal device has the information about the random access procedure on the secondary access network device side.

In a possible implementation,
the processing unit 1101 is further configured to obtain a second RA report, where the second RA report includes information about a random access procedure initiated by the terminal device to the source master access network device; and
the transceiver unit 1102 is further configured to send the second RA report to the target access network device.

In a possible implementation, the transceiver unit 1102 is further configured to:
receive third indication information from the target access network device, where the third indication information indicates to report information about a random access procedure on the master access network device side.

In a possible implementation, the transceiver unit 1102 is further configured to:
send fourth indication information to the target access network device, where the fourth indication information indicates that the terminal device has the information about the random access procedure on the master access network device side.

In a possible implementation,
the target access network device and the source master access network device are a same access network device; or
the target access network device and the source master access network device are different access network devices.

In another implementation example of the communication apparatus 1100, for example, when the communication apparatus 1100 is the target access network device in the foregoing embodiments, or a component (for example, a processor, a chip, a chip system, or the like) of the target access network device, an implementation process of the communication apparatus 1100 is as follows.

The transceiver unit 1102 is configured to receive a first message from a terminal device, where the first message includes a first RA report and first identification information, the first RA report includes information about a random access procedure initiated by the terminal device to a source secondary access network device, and the first identification information indicates a source master access network device.

The processing unit 1101 is configured to determine the source master access network device.

The transceiver unit 1102 is further configured to send the first RA report to the source secondary access network device through the source master access network device.

In a possible implementation, the first RA report is carried in a second message sent by the target access network device to the source master access network device.

In a possible implementation, the first RA report is carried in a third message sent by the target access network device to a core network device.

In a possible implementation, the third message further includes target identification information, the target identification information includes at least one of the first identification information and third identification information, and the third identification information is an identifier of the source master access network device that is determined based on the first identification information.

In a possible implementation, the first message further includes second identification information, the second identification information indicates the source secondary access network device, and the second identification information is carried in the first message in a non-container form. The transceiver unit 1102 is specifically configured to:
send, to the source master access network device, the second identification information carried in the non-container form.

In a possible implementation, the first identification information includes PCell information of the source master access network device, and the PCell information includes at least one of a CGI of a PCell, a TAC of the PCell, a physical cell identifier PCI of the PCell, and frequency information.

In a possible implementation, the first identification information is carried in the first message in a non-container form.

In a possible implementation, the transceiver unit 1102 is specifically configured to:
send, for the target access network device to the source secondary access network device through the source master access network device, the first RA report carried in a container form.

In a possible implementation, the transceiver unit 1102 is further configured to:
send first indication information to the terminal device, where the first indication information indicates to report information about a random access procedure on a secondary access network device side.

In a possible implementation, the transceiver unit 1102 is further configured to:
receive second indication information from the terminal device, where the second indication information indicates that the terminal device has the information about the random access procedure on the secondary access network device side.

In a possible implementation,
the transceiver unit 1102 is further configured to receive a second RA report from the terminal device, where the second RA report includes information about a second random access procedure, and the second random access procedure is a random access procedure initiated by the terminal device to the source master access network device; and
the transceiver unit is further configured to send the second RA report to the source master access network device.

In a possible implementation, the transceiver unit 1102 is further configured to:
send third indication information to the terminal device, where the third indication information indicates to report information about a random access procedure on the master access network device side.

In a possible implementation, the transceiver unit 1102 is further configured to:
receive fourth indication information from the terminal device, where the fourth indication information indicates that the terminal device has the information about the random access procedure on the master access network device side.

In a possible implementation,
the target access network device and the source master access network device are a same access network device; or
the target access network device and the source master access network device are different access network devices.

In a possible implementation, the transceiver unit 1102 is further configured to:
send fifth indication information to the source master access network device, where the fifth indication information indicates that the first RA report includes the information about the random access procedure initiated by the terminal device to the source secondary access network device.

In another implementation example of the communication apparatus 1100, for example, when the communication apparatus 1100 is the core network device in the foregoing embodiments, or a component (for example, a processor, a chip, a chip system, or the like) of the core network device, an implementation process of the communication apparatus 1100 is as follows.

The transceiver unit 1102 is configured to receive a third message from a target access network device, where the third message includes a first RA report and target identification information, the first RA report includes information about a random access procedure initiated by a terminal device to a source secondary access network device, and the target identification information is used to determine a source master access network device.

The processing unit 1101 is configured to determine the source master access network device.

The transceiver unit 1102 is further configured to send the first RA report to the source secondary access network device through the source master access network device.

In a possible implementation, the target identification information includes first identification information, and the first identification information indicates the source master access network device.

The first identification information includes PCell information of the source master access network device, and the PCell information includes at least one of a CGI of a PCell, a TAC of the PCell, a physical cell identifier PCI of the PCell, and frequency information.

In a possible implementation,
the target identification information includes PSCell information of the source secondary access network device, and the PSCell information includes at least one of a CGI of a PSCell, a TAC of the PSCell, a PCI of the PSCell, and frequency information; and/or
the target identification information includes PSCell information of the source secondary access network device, and the SCell information includes at least one of a CGI of an SCell, a TAC of the SCell, a PCI of the SCell, and frequency information.

In a possible implementation, the target identification information includes an identifier of the source master access network device.

In a possible implementation, the third message further includes fifth indication information, and the fifth indication information indicates that the first RA report includes the information about the random access procedure initiated by the terminal device to the source secondary access network device.

In a possible implementation,
the first RA report is carried in the third message in a container form, and the target identification information is carried in the third message in a non-container form.

In another implementation example of the communication apparatus 1100, for example, when the communication apparatus 1100 is the source master access network device in the foregoing embodiments, or a component (for example, a processor, a chip, a chip system, or the like) of the source master access network device, an implementation process of the communication apparatus 1100 is as follows.

The transceiver unit 1102 is configured to receive, from a target access network device, a first RA report that is carried in a container form, where the first RA report includes information about a random access procedure initiated by a terminal device to a source secondary access network device.

The processing unit 1101 is configured to determine the source secondary access network device.

The transceiver unit 1102 is further configured to send the first RA report to the source secondary access network device.

In a possible implementation, the first RA report is carried in a second message sent by the target access network device to the source master access network device.

In a possible implementation, the first RA report is carried in a fourth message sent by the target access network device to the source master access network device through a core network device.

In a possible implementation, the transceiver unit 1102 is further configured to:
receive, from the target access network device, second identification information carried in a non-container form, where the second identification information indicates the source secondary access network device.

In a possible implementation, the first RA report includes second identification information, and the second identification information indicates the source secondary access network device.

In a possible implementation, the second identification information includes PSCell information of the source secondary access network device, and the PSCell information includes at least one of a CGI of a PSCell, a TAC of the PSCell, a PCI of the PSCell, and frequency information; and/or
the second identification information includes PSCell information of the source secondary access network device, and the SCell information includes at least one of a CGI of an SCell, a TAC of the SCell, a PCI of the SCell, and frequency information.

In another implementation example of the communication apparatus 1100, for example, when the communication apparatus 1100 is the source secondary access network device in the foregoing embodiments, or a component (for example, a processor, a chip, a chip system, or the like) of the source secondary access network device, an implementation process of the communication apparatus 1100 is as follows.

The transceiver unit 1102 is configured to receive a fifth message from a source master access network device, where the fifth message includes a first RA report, and the first RA report includes information about a random access procedure initiated by a terminal device to a source secondary access network device.

The processing unit 1101 is configured to update a configuration based on the first RA report.

In another implementation example of the communication apparatus 1100, for example, when the communication apparatus 1100 is the terminal device in the foregoing embodiments, or a component (for example, a processor, a chip, a chip system, or the like) of the terminal device, an implementation process of the communication apparatus 1100 is as follows.

The processing unit 1101 is configured to obtain a first random access report RAreport, where the first RA report includes information about a random access procedure initiated by the terminal device to a source secondary access network device.

The transceiver unit 1102 is configured to: after a master access network device of the terminal device changes from a source master access network device to a target access network device, send, by the terminal device, a first message to the target access network device, where the first message includes the first RA report and second identification information, and the second identification information indicates the source secondary access network device. The second identification information is carried in the first message in a non-container form, and the first RA report is carried in the first message in a container form.

In a possible implementation, the first RA report includes cell information of the source secondary access network device.

In a possible implementation, the second identification information includes PSCell information of the source secondary access network device, and the PSCell information includes at least one of a CGI of a PSCell, a TAC of the PSCell, a PCI of the PSCell, and frequency information.

In a possible implementation, the second identification information includes PSCell information of the source secondary access network device, and the SCell information includes at least one of a CGI of an SCell, a TAC of the SCell, a PCI of the SCell, and frequency information.

In a possible implementation, the transceiver unit 1102 is further configured to:
receive first indication information from the target access network device, where the first indication information indicates to report information about a random access procedure on a secondary access network device side.

In a possible implementation, the transceiver unit 1102 is further configured to:
send second indication information to the target access network device, where the second indication information indicates that the terminal device has the information about the random access procedure on the secondary access network device side.

In a possible implementation,
the processing unit 1101 is further configured to obtain a second RA report, where the second RA report includes information about a random access procedure initiated by the terminal device to the source master access network device; and
the transceiver unit 1102 is further configured to send the second RA report to the target access network device.

In a possible implementation, the transceiver unit 1102 is further configured to:
receive third indication information from the target access network device, where the third indication information indicates to report information about a random access procedure on the master access network device side.

In a possible implementation, the transceiver unit 1102 is further configured to:
send fourth indication information to the target access network device, where the fourth indication information indicates that the terminal device has the information about the random access procedure on the master access network device side.

In a possible implementation,
the target access network device and the source master access network device are a same access network device; or
the target access network device and the source master access network device are different access network devices.

In another implementation example of the communication apparatus 1100, for example, when the communication apparatus 1100 is the target access network device in the foregoing embodiments, or a component (for example, a processor, a chip, a chip system, or the like) of the target access network device, an implementation process of the communication apparatus 1100 is as follows.

The transceiver unit 1102 is configured to receive a first message from a terminal device, where the first message includes a first RA report and second identification information, the first RA report includes information about a random access procedure initiated by the terminal device to a source secondary access network device, and the second identification information indicates the source secondary access network device. The first RA report is carried in the first message in a container form, and the second identification information is carried in the first message in a non-container form.

The processing unit 1101 is configured to determine the source secondary access network device based on the second identification information.

The transceiver unit 1102 is further configured to send the first RA report to the source secondary access network device through a core network device.

In a possible implementation, the first RA report further includes the second identification information.

In a possible implementation, the second identification information includes PSCell information of the source secondary access network device, and the PSCell information includes at least one of a CGI of a PSCell, a TAC of the PSCell, a PCI of the PSCell, and frequency information. In a possible implementation, the second identification information includes PSCell information of the source secondary access network device, and the SCell information includes at least one of a CGI of an SCell, a TAC of the SCell, a PCI of the SCell, and frequency information.

In a possible implementation, the first RA report is carried in a container form in a second message sent by the target access network device to the core network device.

In a possible implementation, the second message further includes the second identification information, and the second identification information is carried in the second message in a non-container form.

In a possible implementation, the transceiver unit 1102 is further configured to:
send first indication information to the terminal device, where the first indication information indicates to report information about a random access procedure on a secondary access network device side.

In a possible implementation, the transceiver unit 1102 is further configured to:
receive second indication information from the terminal device, where the second indication information indicates that the terminal device has the information about the random access procedure on the secondary access network device side.

In a possible implementation, the transceiver unit 1102 is further configured to:
receive a second RA report from the terminal device, where the second RA report includes information about a second random access procedure, and the second random access procedure is a random access procedure initiated by the terminal device to the source master access network device; and
send the second RA report to the source master access network device.

In a possible implementation, the transceiver unit 1102 is further configured to:
send third indication information to the terminal device, where the third indication information indicates to report information about a random access procedure on the master access network device side.

In a possible implementation, the transceiver unit 1102 is further configured to:
receive fourth indication information from the terminal device, where the fourth indication information indicates that the terminal device has the information about the random access procedure on the master access network device side.

In a possible implementation,
the target access network device and the source master access network device are a same access network device; or
the target access network device and the source master access network device are different access network devices.

In a possible implementation, the second message further includes fifth indication information, and the fifth indication information indicates that the first RA report is an RA report of the random access procedure initiated by the terminal device to the source secondary access network device.

In another implementation example of the communication apparatus 1100, for example, when the communication apparatus 1100 is the core network device in the foregoing embodiments, or a component (for example, a processor, a chip, a chip system, or the like) of the core network device, an implementation process of the communication apparatus 1100 is as follows.

The transceiver unit 1102 is configured to receive a second message from a target access network device, where the second message includes a first RA report and second identification information, the first RA report includes information about a random access procedure initiated by a terminal device to a source secondary access network device, and the second identification information indicates the source secondary access network device. The first RA report is carried in the second message in a container form, and the second identification information is carried in the second message in a non-container form.

The processing unit 1101 is configured to determine a first access network device connected to the source secondary access network device.

The transceiver unit 1102 is further configured to send the first RA report to the source secondary access network device through the first access network device.

In a possible implementation, the second identification information includes PSCell information of the source secondary access network device, and the PSCell information includes at least one of a CGI of a PSCell, a TAC of the PSCell, a PCI of the PSCell, and frequency information; and/or
the second identification information includes PSCell information of the source secondary access network device, and the SCell information includes at least one of a CGI of an SCell, a TAC of the SCell, a PCI of the SCell, and frequency information.

In a possible implementation, the second identification information includes an identifier of the source secondary access network device.

In a possible implementation, the second message further includes fifth indication information, and the fifth indication information indicates that the first RA report includes the information about the random access procedure initiated by the terminal device to the source secondary access network device.

In another implementation example of the communication apparatus 1100, for example, when the communication apparatus 1100 is the source master access network device in the foregoing embodiments, or a component (for example, a processor, a chip, a chip system, or the like) of the source master access network device, an implementation process of the communication apparatus 1100 is as follows.

The transceiver unit 1102 is configured to receive, from a core network device, a first RA report that is carried in a container form, where the first RA report includes information about a random access procedure initiated by a terminal device to a source secondary access network device.

The processing unit 1101 is configured to determine the source secondary access network device.

The transceiver unit 1102 is further configured to send the first RA report to the source secondary access network device.

In a possible implementation, the transceiver unit 1102 is further configured to:
receive, from the target access network device, second identification information carried in a non-container form, where the second identification information indicates the source secondary access network device.

In a possible implementation, the first RA report includes second identification information, and the second identification information indicates the source secondary access network device.

In a possible implementation, the second identification information includes PSCell information of the source secondary access network device, and the PSCell information includes at least one of a CGI of a PSCell, a TAC of the PSCell, a PCI of the PSCell, and frequency information; and/or
the second identification information includes PSCell information of the source secondary access network device, and the SCell information includes at least one of a CGI of an SCell, a TAC of the SCell, a PCI of the SCell, and frequency information.

In any possible implementation of the communication apparatus 1100, the first RA report includes at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a PLMN identifier, a purpose of a first random access procedure, an absolute frequency of a reference signal associated with a random access resource used in the first random access procedure, a frequency domain position associated with an uplink BWP corresponding to the random access resource used in the first random access procedure, a frequency domain position bandwidth associated with the uplink BWP corresponding to the random access resource used in the first random access procedure, a frequency domain position subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about an SSB associated with the random access resource used in the first random access procedure, and information about a CSI-RS associated with the random access resource used in the first random access procedure, where the first random access procedure is the random access procedure initiated by the terminal device to the source secondary access network device.

In another implementation example of the communication apparatus 1100, for example, when the communication apparatus 1100 is the source secondary access network device in the foregoing embodiments, or a component (for example, a processor, a chip, a chip system, or the like) of the secondary access network device, an implementation process of the communication apparatus 1100 is as follows.

The transceiver unit 1102 is configured to receive a fifth message from a first access network device, where the fifth message includes a first RA report, and the first RA report includes information about a random access procedure initiated by a terminal device to a source secondary access network device.

The processing unit 1101 is configured to update a configuration based on the first RA report.

In another implementation example of the communication apparatus 1100, for example, when the communication apparatus 1100 is the terminal device in the foregoing embodiments, or a component (for example, a processor, a chip, a chip system, or the like) of the terminal device, an implementation process of the communication apparatus 1100 is as follows.

The processing unit 1101 is configured to obtain failure information of requesting on demand SI.

The transceiver unit 1102 is configured to send the failure information of requesting the on demand SI to an access network device.

The failure information of requesting the on demand SI includes at least one of the following:
an information type of the on demand SI;
first indication information, where the first indication information indicates whether the terminal device receives a correct response for the on demand SI;
current position information of the terminal device; or
second indication information, where the second indication information indicates whether the on demand SI is area-specific system information.

In another implementation example of the communication apparatus 1100, for example, when the communication apparatus 1100 is the access network device in the foregoing embodiments, or a component (for example, a processor, a chip, a chip system, or the like) of the access network device, an implementation process of the communication apparatus 1100 is as follows.

The transceiver unit 1102 is configured to receive, from a terminal device, failure information of requesting on demand SI.

The processing unit 1101 is configured to update a configuration based on the failure information of requesting the on demand SI.

The failure information of requesting the on demand SI includes at least one of the following:
an information type of the on demand SI;
first indication information, where the first indication information indicates whether the terminal device receives a correct response for the on demand SI;
current position information of the terminal device; or
second indication information, where the second indication information indicates whether the on demand SI is area-specific system information.

It should be noted that, for content such as an information execution process of a unit of the communication apparatus 1100 and corresponding beneficial effects, refer to the descriptions in the foregoing method embodiments of this application. Details are not described herein again.

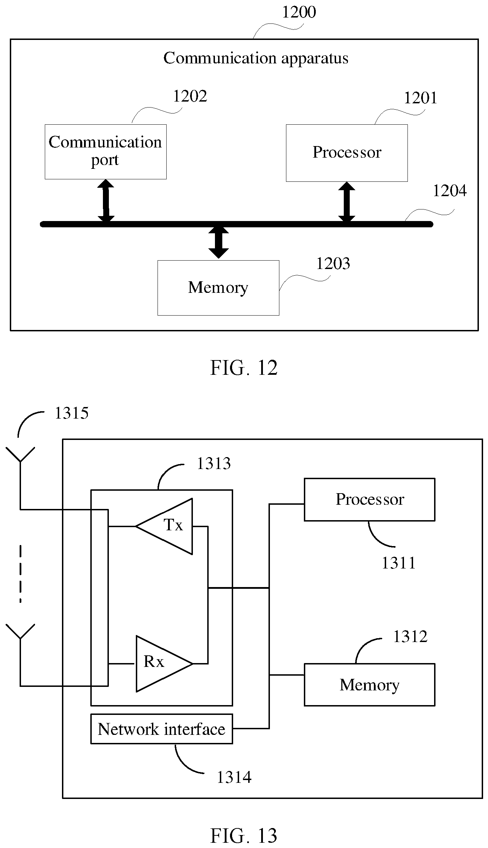

FIG. 12 shows a communication apparatus in the foregoing embodiments according to an embodiment of this application. The communication apparatus may be specifically a terminal device in the foregoing embodiments. FIG. 12 is a schematic diagram of a possible logical structure of the communication apparatus 1200. The communication apparatus 1200 may include but is not limited to at least one processor 1201 and a communication port 1202. Further, optionally, the apparatus may include at least one of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that, the communication apparatus shown in FIG. 12 may be specifically configured to implement steps implemented by the terminal device in the foregoing corresponding method embodiments, and implement technical effects corresponding to the terminal device. For a specific implementation of the communication apparatus shown in FIG. 12, refer to the descriptions in the foregoing method embodiments. Details are not described herein again.

FIG. 13 is a schematic diagram of a structure of a communication apparatus in the foregoing embodiments according to an embodiment of this application. The communication apparatus may be an access network device in any one of the foregoing embodiments, for example, a master access network device, a target access network device, a source master access network device, a source secondary access network device, a first access network device, or an access network device. For a specific structure of the access network device, refer to the structure shown in FIG. 13.

The access network device includes at least one processor 1311, at least one memory 1312, at least one transceiver 1313, at least one network interface 1314, and one or more antennas 1315. The processor 1311, the memory 1312, the transceiver 1313, and the network interface 1314 are connected, for example, by using a bus. In this embodiment of this application, the connection may include various interfaces, transmission lines, buses, or the like. This is not limited in this embodiment. The antenna 1315 is connected to the transceiver 1313. The network interface 1314 is configured to enable the access network device to connect to another communication device by using a communication link. For example, the network interface 1314 may include a network interface between the access network device and a core network element, for example, an S1 interface. The network interface may include a network interface between the access network device and another network device (for example, another access network device or a core network element), for example, an X2 or Xn interface.

The processor 1311 is mainly configured to: process a communication protocol and communication data, control the entire access network device, execute a software program, and process data of the software program, for example, configured to support the access network device in performing an action described in the embodiments. The access network device may include a baseband processor and a central processing unit. The baseband processor is mainly configured to process the communication protocol and the communication data. The central processing unit is mainly configured to control the entire terminal device, execute the software program, and process the data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 and the processor 1311 may be integrated together, for example, integrated into one chip. The memory 1312 can store program code for performing the technical solutions in embodiments of this application, and execution is controlled by the processor 1311. Various types of executed computer program code may also be considered as a driver of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the access network device and a terminal, and the transceiver 1313 may be connected to the antenna 1315. The transceiver 1313 includes a transmitter Tx and a receiver Rx. Specifically, the one or more antennas 1315 may receive a radio frequency signal, and the receiver Rx of the transceiver 1313 is configured to receive the radio frequency signal from the antenna, convert the radio frequency signal into a digital baseband signal or a digital medium-frequency signal, and provide the digital baseband signal or the digital medium-frequency signal to the processor 1311, so that the processor 1311 performs further processing, for example, demodulation processing and decoding processing, on the digital baseband signal or the digital medium-frequency signal. In addition, the transmitter Tx in the transceiver 1313 is further configured to receive a modulated digital baseband signal or digital medium-frequency signal from the processor 1311, convert the modulated digital baseband signal or digital medium-frequency signal into a radio frequency signal, and send the radio frequency signal by using the one or more antennas 1315. Specifically, the receiver Rx may selectively perform one or more levels of down-mixing processing and analog-to-digital conversion processing on the radio frequency signal to obtain the digital baseband signal or the digital medium-frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

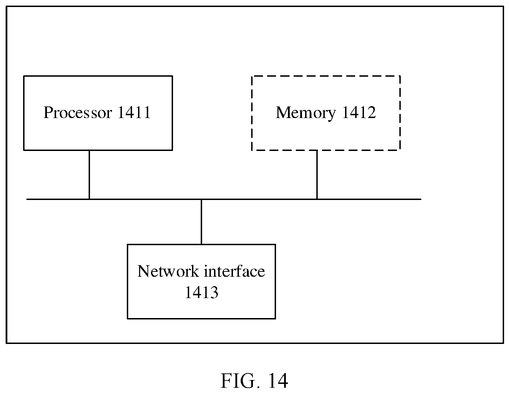

FIG. 14 is a schematic diagram of a possible logical structure of the core network element in the foregoing embodiments according to an embodiment of this application. The core network element includes at least one memory 1412, at least one processor 1411, and at least one network interface 1413. The memory 1412, the processor 1411, and the network interface 1413 are connected.

The processor 1411 may be configured to implement various functions for the core network element, for example, control one or more access network devices, manage resources in a system in a unified manner, or configure a resource for a terminal.

The memory 1412 may be configured to store program code for performing the technical solutions in embodiments of this application, and execution is controlled by the processor 1411, to implement a function of the core network element in this embodiment of this application.

The core network element may communicate with an access network device or a terminal by using the network interface 1413, for example, send data to the access network device or the terminal, or receive data from the access network device or the terminal.

An embodiment of this application further provides a computer-readable storage medium that stores one or more computer-executable instructions. When the computer-executable instructions are executed by a processor, the processor performs the method in the possible implementations of the foregoing communication apparatus (implemented by using a terminal device, an access network device, or a core network device) in the foregoing embodiments.

An embodiment of this application further provides a computer program product (or referred to as a computer program) that stores one or more computers. When the computer program product is executed by a processor, the processor performs the method in the possible implementations of the foregoing communication apparatus (implemented by using a terminal device, an access network device, or a core network device).

An embodiment of this application further provides a chip system. The chip system includes at least one processor, configured to support a terminal device in implementing a function in the possible implementations of the foregoing communication apparatus (implemented by using a terminal device, an access network device, or a core network device). Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a communication system. The network system architecture includes the communication apparatus (including one or more of an access network device and/or a core network device) in any one of the foregoing embodiments.

Optionally, the communication system further includes the terminal device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software function unit. When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
obtaining, by a terminal device, a first random access report RA report, wherein the first RA report comprises information about a random access procedure initiated by the terminal device to a source secondary access network device; and
after a master access network device of the terminal device changes from a source master access network device to a target access network device, sending, by the terminal device, a first message to the target access network device, wherein the first message comprises the first RA report and first identification information, and the first identification information indicates the source master access network device.

2. The method according to claim 1, wherein the first identification information comprises primary cell PCell information of the source master access network device, and the PCell information comprises at least one of a cell global identity CGI of a PCell, a tracking area code TAC of the PCell, a physical cell identifier PCI of the PCell, and frequency information.

3. The method according to claim 1 or 2, wherein
the first identification information is carried in the first message in a non-container (container) form.

4. The method according to any one of claims 1 to 3, wherein
the first message further comprises second identification information, the second identification information indicates the source secondary access network device, and the second identification information is carried in the first message in a non-container form.

5. The method according to any one of claims 1 to 4, wherein before the sending, by the terminal device, a first message to the target access network device, the method further comprises:
receiving, by the terminal device, first indication information from the target access network device, wherein the first indication information indicates to report information about a random access procedure on a secondary access network device side.

6. The method according to claim 5, wherein before the receiving, by the terminal device, first indication information from the target access network device, the method further comprises:
sending, by the terminal device, second indication information to the target access network device, wherein the second indication information indicates that the terminal device has the information about the random access procedure on the secondary access network device side.

7. The method according to any one of claims 1 to 6, wherein
the target access network device and the source master access network device are a same access network device; or
the target access network device and the source master access network device are different access network devices.

8. The method according to any one of claims 1 to 7, wherein the first RA report comprises at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a public land mobile network PLMN identifier, a purpose of a first random access procedure, an absolute frequency of a reference signal associated with a random access resource used in the first random access procedure, a frequency domain position associated with an uplink bandwidth part BWP corresponding to the random access resource used in the first random access procedure, a bandwidth associated with the uplink BWP corresponding to the random access resource used in the first random access procedure, a subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about a synchronization signal block SSB associated with the random access resource used in the first random access procedure, and information about a channel state information-reference signal CSI-RS associated with the random access resource used in the first random access procedure, wherein the first random access procedure is the random access procedure initiated by the terminal device to the source secondary access network device.

9. The method according to any one of claims 1 to 8, wherein the method further comprises:
obtaining, by the terminal device, a second RA report, wherein the second RA report comprises information about a random access procedure initiated by the terminal device to the source master access network device; and
sending, by the terminal device, the second RA report to the target access network device.

10. The method according to claim 9, wherein before the sending, by the terminal device, the second RA report to the target access network device, the method further comprises:
receiving, by the terminal device, third indication information from the target access network device, wherein the third indication information indicates to report information about a random access procedure on the master access network device side.

11. The method according to claim 10, wherein before the receiving, by the terminal device, third indication information from the target access network device, the method further comprises:
sending, by the terminal device, fourth indication information to the target access network device, wherein the fourth indication information indicates that the terminal device has the information about the random access procedure on the master access network device side.

12. A communication method, comprising:
receiving, by a target access network device, a first message from a terminal device, wherein the first message comprises a first RA report and first identification information, the first RA report comprises information about a random access procedure initiated by the terminal device to a source secondary access network device, and the first identification information indicates a source master access network device; and
sending, by the target access network device, the first RA report to the source secondary access network device through the source master access network device.

13. The method according to claim 12, wherein
the first RA report is carried in a second message sent by the target access network device to the source master access network device.

14. The method according to claim 12, wherein
the first RA report is carried in a third message sent by the target access network device to a core network device.

15. The method according to claim 14, wherein
the third message further comprises target identification information, the target identification information comprises at least one of the first identification information and third identification information, and the third identification information is an identifier of the source master access network device that is determined based on the first identification information.

16. The method according to any one of claims 12 to 15, wherein the first message further comprises second identification information, the second identification information indicates the source secondary access network device, and the second identification information is carried in the first message in a non-container form; and the method further comprises:
sending, by the target access network device to the source master access network device, the second identification information carried in the non-container form.

17. The method according to any one of claims 12 to 16, wherein the first identification information comprises primary cell PCell information of the source master access network device, and the PCell information comprises at least one of a cell global identity CGI of a PCell, a tracking area code TAC of the PCell, a physical cell identifier PCI of the PCell, and frequency information.

18. The method according to any one of claims 12 to 17, wherein
the first identification information is carried in the first message in a non-container form.

19. The method according to any one of claims 12 to 18, wherein the sending, by the target access network device, the first RA report to the source secondary access network device through the source master access network device comprises:
sending, by the target access network device to the source secondary access network device through the source master access network device, the first RA report carried in a container form.

20. The method according to any one of claims 12 to 19, wherein before the receiving, by a target access network device, a first message from a terminal device, the method further comprises:
sending, by the target access network device, first indication information to the terminal device, wherein the first indication information indicates to report information about a random access procedure on a secondary access network device side.

21. The method according to claim 20, wherein before the sending, by the target access network device, first indication information to the terminal device, the method further comprises:
receiving, by the target access network device, second indication information from the terminal device, wherein the second indication information indicates that the terminal device has the information about the random access procedure on the secondary access network device side.

22. The method according to any one of claims 12 to 21, wherein the method further comprises:
receiving, by the target access network device, a second RA report from the terminal device, wherein the second RA report comprises information about a second random access procedure, and the second random access procedure is a random access procedure initiated by the terminal device to the source master access network device; and
sending, by the target access network device, the second RA report to the source master access network device.

23. The method according to claim 22, wherein before the receiving, by the target access network device, a second RA report from the terminal device, the method further comprises:
sending, by the target access network device, third indication information to the terminal device, wherein the third indication information indicates to report information about a random access procedure on a master access network device side.

24. The method according to claim 23, wherein before the sending, by the target access network device, third indication information to the terminal device, the method further comprises:
receiving, by the target access network device, fourth indication information from the terminal device, wherein the fourth indication information indicates that the terminal device has the information about the random access procedure on the master access network device side.

25. The method according to any one of claims 12 to 24, wherein the method further comprises:
sending, by the target access network device, fifth indication information to the source master access network device, wherein the fifth indication information indicates that the first RA report comprises the information about the random access procedure initiated by the terminal device to the source secondary access network device.

26. The method according to any one of claims 12 to 25, wherein
the target access network device and the source master access network device are a same access network device; or
the target access network device and the source master access network device are different access network devices.

27. The method according to any one of claims 12 to 26, wherein the first RA report comprises at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a public land mobile network PLMN identifier, a purpose of a first random access procedure, an absolute frequency of a reference signal associated with a random access resource used in the first random access procedure, a frequency domain position associated with an uplink bandwidth part BWP corresponding to the random access resource used in the first random access procedure, a bandwidth associated with the uplink BWP corresponding to the random access resource used in the first random access procedure, a subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about a synchronization signal block SSB associated with the random access resource used in the first random access procedure, and information about a channel state information-reference signal CSI-RS associated with the random access resource used in the first random access procedure, wherein the first random access procedure is the random access procedure initiated by the terminal device to the source secondary access network device.

28. A communication method, comprising:
receiving, by a core network device, a third message from a target access network device, wherein the third message comprises a first RA report and target identification information, the first RA report comprises information about a random access procedure initiated by a terminal device to a source secondary access network device, and the target identification information is used to determine a source master access network device; and
sending, by the core network device, the first RA report to the source secondary access network device through the source master access network device.

29. The method according to claim 28, wherein the target identification information comprises first identification information, and the first identification information indicates the source master access network device; and
the first identification information comprises primary cell PCell information of the source master access network device, and the PCell information comprises at least one of a cell global identity CGI of a PCell, a tracking area code TAC of the PCell, a physical cell identifier PCI of the PCell, and frequency information.

30. The method according to claim 28 or 29, wherein
the target identification information comprises primary secondary cell PSCell information of the source secondary access network device, and the PSCell information comprises at least one of a CGI of a PSCell, a TAC of the PSCell, a PCI of the PSCell, and frequency information; and/or
the target identification information comprises PSCell information of the source secondary access network device, and the SCell information comprises at least one of a CGI of an SCell, a TAC of the SCell, a PCI of the SCell, and frequency information.

31. The method according to any one of claims 28 to 30, wherein
the target identification information comprises an identifier of the source master access network device.

32. The method according to any one of claims 28 to 31, wherein
the first RA report is carried in the third message in a container form, and the target identification information is carried in the third message in a non-container form.

33. The method according to any one of claims 28 to 32, wherein the first RA report comprises at least one of the following:
a CGI of a PSCell, a TAC of the PSCell, a PCI of the PSCell, frequency information of the PSCell, a CGI of an SCell, a TAC of the SCell, a PCI of the SCell, frequency information of the SCell, a public land mobile network PLMN identifier, a purpose of a first random access procedure, an absolute frequency of a reference signal associated with a random access resource used in the first random access procedure, a frequency domain position associated with an uplink bandwidth part BWP corresponding to the random access resource used in the first random access procedure, a bandwidth associated with the uplink BWP corresponding to the random access resource used in the first random access procedure, a subcarrier spacing associated with the uplink BWP corresponding to the random access resource used in the first random access procedure, a frequency domain start position corresponding to a message 1 in the first random access procedure, a frequency division manner corresponding to the message 1 in the first random access procedure, a subcarrier spacing corresponding to the message 1 in the first random access procedure, information about a synchronization signal block SSB associated with the random access resource used in the first random access procedure, and information about a channel state information-reference signal CSI-RS associated with the random access resource used in the first random access procedure, wherein the first random access procedure is the random access procedure initiated by the terminal device to the source secondary access network device.

34. A communication apparatus, comprising at least one logic circuit and an input/output interface, wherein
the input/output interface is configured to input a signal and/or output a signal; and
the logic circuit is configured to perform the method according to any one of claims 1 to 11, or the logic circuit is configured to perform the method according to any one of claims 12 to 27, or the logic circuit is configured to perform the method according to any one of claims 28 to 33.

35. A communication apparatus, comprising at least one processor and a memory, wherein
the memory is configured to store a program or instructions; and
the at least one processor is configured to execute the program or the instructions, so that the apparatus implements the method according to any one of claims 1 to 11, or the apparatus implements the method according to any one of claims 12 to 27; or the apparatus implements the method according to any one of claims 28 to 33.

36. A computer-readable storage medium, wherein the medium stores instructions, and when the instructions are executed by a computer, the method according to any one of claims 1 to 11 is implemented, or the method according to any one of claims 12 to 27 is implemented, or the method according to any one of claims 28 to 33 is implemented.

37. A communication system, comprising an apparatus for implementing the method according to any one of claims 1 to 11, or an apparatus for implementing the method according to any one of claims 12 to 27, or an apparatus for implementing the method according to any one of claims 28 to 33.

38. A communication apparatus, comprising a unit or a module configured to perform the method according to any one of claims 1 to 11.

39. A communication apparatus, comprising a unit or a module configured to perform the method according to any one of claims 12 to 27.

40. A communication apparatus, comprising a unit or a module configured to perform the method according to any one of claims 28 to 33.
